(19) Europäisches Patentamt / European Patent Office / Office européen des brevets

(11) **EP 2 755 388 B1**

(12) **EUROPEAN PATENT SPECIFICATION**

(45) Date of publication and mention
of the grant of the patent:
**16.10.2019 Bulletin 2019/42**

(21) Application number: **12847873.2**

(22) Date of filing: **01.11.2012**

(51) Int Cl.:
*H04N 19/105* (2014.01)   *H04N 19/176* (2014.01)
*H04N 19/593* (2014.01)   *H04N 19/117* (2014.01)
*H04N 19/157* (2014.01)   *H04N 19/59* (2014.01)
*H04N 19/136* (2014.01)

(86) International application number:
**PCT/JP2012/078306**

(87) International publication number:
**WO 2013/069530 (16.05.2013 Gazette 2013/20)**

(54) **METHOD, DEVICE, AND PROGRAM FOR ENCODING AND DECODING IMAGE**

VERFAHREN, VORRICHTUNG, UND PROGRAMM ZUR BILDKODIERUNG UND -DEKODIERUNG

PROCÉDÉ, DISPOSITIF ET PROGRAMME POUR CODER ET DÉCODER UNE IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2011   JP 2011243041**

(43) Date of publication of application:
**16.07.2014   Bulletin 2014/29**

(73) Proprietor: **Nippon Telegraph And Telephone
Corporation
Tokyo 1008116 (JP)**

(72) Inventors:
• **MATSUO Shohei**
  **Musashino-shi**
  **Tokyo 180-8585 (JP)**
• **TAKAMURA Seishi**
  **Musashino-shi**
  **Tokyo 180-8585 (JP)**
• **SHIMIZU Atsushi**
  **Musashino-shi**
  **Tokyo 180-8585 (JP)**
• **JOZAWA Hirohisa**
  **Musashino-shi**
  **Tokyo 180-8585 (JP)**

(74) Representative: **Ahner, Philippe et al
BREVALEX
95, rue d'Amsterdam
75378 Paris Cedex 8 (FR)**

(56) References cited:
**WO-A1-2010/143583     JP-A- 2004 007 337
JP-A- 2011 050 001**

• **XINWEI GAO ET AL: "Mode-dependent intra
frame interpolation for H.264/AVC compressed
video", VISUAL COMMUNICATIONS AND IMAGE
PROCESSING (VCIP), 2011 IEEE, IEEE, 6
November 2011 (2011-11-06), pages 1-4,
XP032081380, DOI: 10.1109/VCIP.2011.6115986
ISBN: 978-1-4577-1321-7**
• **YOU WEIWEI ET AL: "An adaptive interpolation
scheme for inter-layer prediction", CIRCUITS
AND SYSTEMS, 2008. APCCAS 2008. IEEE ASIA
PACIFIC CONFERENCE ON, IEEE,
PISCATAWAY, NJ, USA, 30 November 2008
(2008-11-30), pages 1747-1750, XP031405351,
DOI: 10.1109/APCCAS.2008.4746378 ISBN:
978-1-4244-2341-5**
• **LOU J ET AL: "Motorola Mobility's adaptive
interpolation filter", 96. MPEG MEETING;
21-3-2011 - 25-3-2011; GENEVA; (MOTION
PICTURE EXPERT GROUP OR ISO/IEC
JTC1/SC29/WG11),, no. m19888, 16 March 2011
(2011-03-16), XP030048455,**

• BROSS B ET AL: "WD4: Working Draft 4 of High-Efficiency Video Coding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F803, 9 August 2011 (2011-08-09) , XP030009800,

**Description**

TECHNICAL FIELD

The present invention relates to a highly efficient encoding/decoding method of a picture signal, and more particularly to technology for encoding or decoding a picture using intra-prediction.
Priority is claimed on Japanese Patent Application No. 2011-243041, filed November 7, 2011.

BACKGROUND ART

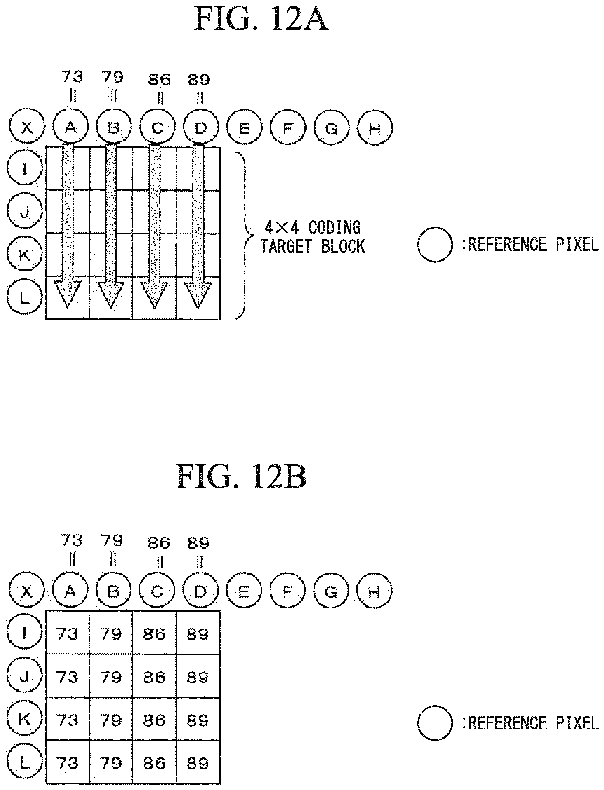

Algorithms of moving-picture coding are classified roughly into inter-frame coding (inter-coding) and intra-frame coding (intra-coding). Inter-frame coding is an approach which compresses information using correlation in a time-domain within a moving picture. A representative example thereof is inter-frame prediction using motion compensation. In contrast, intra-frame coding is an approach which compresses information using a correlation within a frame. Joint Photographic Experts Group (JPEG) and Moving Picture Experts Group (MPEG)-2 employ an approach using a discrete cosine transform (DCT) and JPEG2000 employs an approach using a discrete wavelet transform.
In H.264/AVC, prediction in a space-domain is performed in addition to the above-described transform coding (see Non-Patent Document 1). Prediction in a space-domain is intra-frame prediction in which prediction is performed within the same frame in a space dimension. Intra-frame prediction is performed in units of blocks; in H.264/AVC, three types of block sizes (4x4, 8x8, and 16x16) are available for a luminance signal. In addition, it is possible to select a plurality of prediction modes for each block size. In the case of the 4x4 and 8x8 block sizes, nine types of modes are prepared; in the case of the 16x16 block size, four types of modes are prepared. Only the 8x8 block size is available for a chrominance signal and a prediction direction is the same as that of a $16 \times 16$ block for a luminance signal. However, the association between mode numbers and the prediction directions is different.
For any one of these block sizes and modes, pixels generated by intra-frame prediction are obtained by, without exception, copying the same values as values of pixels closest to a coding target block on an adjacent block without changing the values of the closest pixels.
As a specific example, FIGS. 12A and 12B illustrate a case in which a coding target block is a 4x4 block of a luminance signal and vertical prediction (prediction mode 0) is used. In addition, unless otherwise noted, the luminance signal will be assumed in the following description. As illustrated in FIG. 12A, with respect to the coding target block, a pixel value of X in the upper-left block, pixel values of A, B, C, and D in the upper block, pixel values of E, F, G, and H in the upper-right block, and pixel values of I, J, K, and L in the left block are used in prediction. Because the prediction mode 0 is prediction in a vertical direction, a value (73) of A is copied in four adjacent pixels just thereunder (a pixel value of a reference pixel is copied). Hereinafter, likewise, a value (79) of B, a value (86) of C, and a value (89) of D are each copied in four adjacent pixels just thereunder. As a result, in the prediction mode 0, prediction pixel values of the coding target block are as illustrated in FIG. 12B.
Depending on a position at which a coding target block is present, there may be no block to be referred to. In this case, a value of 128 is assigned or a value of an adjacent pixel is assigned, thereby prediction is possible. For example, with respect to a block including a top row of the frame, it is always impossible to refer to nine pixels from X to H, and thus the value of 128 is used. In addition, when there is an upper-left block and an upper block but there is no upper-right block, prediction pixels are generated by assigning the value of D to E, F, G, and H.
As an approach for improving intra-prediction of H.264/AVC, a technique of supporting 33 prediction directions obtained by sub-dividing 8 prediction directions has been proposed. This technique is aimed at reducing a prediction error (also referred to as a prediction residual) due to the roughness of granularity in a prediction direction.

Prior Art Document

Non-Patent Document

Document D1 (XINWEI GAO ET AL: « Mode-dependent intra frame interpolation for H. 264/AVC compressed video », VISUAL COMMUNICATIONS AND IMAGE PROCESSING (VCIP), 2011 IEEE, IEEE, 6 November 2011 (2011-11-06), pages 1-4, XP032081380, DOI : 10.1109/VCIP.2011.6115986 ISBN : 978-1-4577-1321-7) discloses a mode-dependent intra frame interpolation method is proposed for H.264/AVC compressed video. The intra prediction mode information is taken into account in the interpolation filter design. For each intra prediction mode, an optimal Wiener filter is trained based on the representative video sequences. Therefore the trained filter is adaptive to the intra prediction mode. Furthermore, the quantization parameter is also explored as context information for filter selection.
Document D2 (YOU WEIWEI ET AL: "An adaptive interpolation scheme for inter-layer prediction", CIRCUITS AND SYSTEMS, 2008. APCCAS 2008. IEEE ASIA PACIFIC CONFERENCE ON, IEEE, PISCATAWAY, NJ, USA, 30 November 2008 (2008-11-30), pages 1747-1750, XP031405351, DOI: 10.1109/APCCAS.2008.4746378 ISBN: 978-1-4244-2341-5) discloses a calable video coding method in which inter-layer prediction is used to eliminate the redundancies among layers. Joint Scalable Video Model (JSVM) uses a fixed interpolation scheme to interpolate motion and residual information of the base layer into the enhancement layer. The filter used for luma and chroma information is also the same. In this document, an adaptive interpolation scheme for inter-layer prediction in scalable video coding is presented. Firstly, the interpolation filter used for luma information is adaptively selected among three filters: bilinear, bicubic, ant 6-tap filter. The selection of interpolation filter is based on the quantization parameter. Secondly, bilinear filter is used for chroma information instead of the 6-tap filter used in JSVM. Experimental results show that, compared with the fixed interpolation scheme used in JSVM, the proposed scheme achieves satisfied results in both subjective and objective quality.

Document D3 (LOU J ET AL : « Motorola Mobility's adaptive interpolation filter », 96. MPEG MEETING; 21-3-2011 - 25-3-2011; GENEVA; (MOTION PICTURE EXPERT GROUP OR ISO/IEC JTC1/SC29/WG11), no. m19888, 16 March 2011 (2011-03-16), XP030048455) JCTVC-E359 proposes an adaptive method for generation of sub-pixel samples for temporal prediction of each Prediction Unit (PU). In this contribution, the choice of filters is implicitly signaled based on the PU size. More specifically, this contribution proposes that for temporal prediction, a PU with a given size uses a certain class of interpolation filters to generate samples at each sub-pixel position. Although with this scheme it is possible to have as many classes of interpolation filters as the number of allowed PU sizes, this contribution shows the results based on two classes of interpolation filters. The proposed method saves 0.1% on LDHE setting and saves 0.5% on LDLC setting. The proposed method achieves on average the same performance as the anchor on RAHE setting and loses 0.1% on RALC setting. Cross-check will be provided by Sharp. The attached spreadsheet contains detailed data of the results.

In document D7 (BROSS B ET AL: "WD4: Working Draft 4 of High-Efficiency Video Coding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16) URL: HTTP://WFTP3.ITU.INT/AV-ARCH/JCTVC-SITE/? No. JCTVC-F803, 9 AUGUST 2011 (2011-08-09), XP030009800) the coded representation specified in the syntax is designed to enable a high compression capability for a desired image or video quality. The algorithm is typically not lossless, as the exact source sample values are typically not preserved through the encoding and decoding processes. A number of techniques may be used to achieve highly efficient compression. Encoding algorithms (not specified in this Recommendation International Standard) may select between inter and intra coding for block-shaped regions of each picture. Inter coding uses motion vectors for block-based inter prediction to exploit temporal statistical dependencies between different pictures. Intra coding uses various spatial prediction modes to exploit spatial statistical dependencies in the source signal for a single picture. Motion vectors and intra prediction modes may be specified for a variety of block sizes in the picture. The prediction residual is then further compressed using a transform to remove spatial correlation inside the transform block before it is quantised, producing an irreversible process that typically discards less important visual information while forming a close approximation to the source samples. Finally, the motion vectors or intra prediction modes are combined with the quantized transform coefficient information and encoded using either variable length coding or arithmetic coding.

Non-Patent Document 1: Sakae Okubo, Shinya Kadono, Yoshihiro Kikuchi, and Teruhiko Suzuki: "H.264/AVC Textbook (Third revised edition)," Impress R&D, pp. 110-116, 2009

SUMMARY OF INVENTION

Problems to be solved by the Invention

In the above-described intra-prediction, the generation of the reference pixel significantly affects prediction performance. In the case of diagonal prediction (prediction other than horizontal prediction, vertical prediction, and DC prediction), a reference pixel value is a pixel value at a decimal pixel position. In the generation of the pixel value, an interpolation process using a bilinear filter of two taps is used. This filter uses fixed values as a tap length and filter coefficients regardless of coding conditions (quantization step size and the like). However, because the reference pixel value is a decoded pixel value positioned in the vicinity of a block of interest, its characteristic is varied in accordance with the coding conditions. Thus, in the conventional intra-prediction, there is room for improvement in terms of enhancement in coding efficiency because the variation of the characteristic of the reference pixel value in accordance with the coding conditions is not sufficiently considered.

The present invention has been made in view of the above-described circumstances, and an object thereof is to reduce an intra-prediction error and establish a highly efficient intra-coding method by paying attention to a reference pixel for use in intra-prediction and introducing an adaptive reference pixel generating process in accordance with coding conditions.

Means for Solving the Problems

First, terms will be defined. Hereinafter, a region in which coding is performed using intra-prediction is referred to as an intra-prediction block, and a reference pixel to be used in the intra-prediction is referred to as an intra-reference pixel.

To solve the above problems, it is proposed a picture encoding method for generating a prediction signal using spatial inter-pixel prediction and encoding a picture using a prediction residual signal which is a difference between the prediction signal and an original signal that includes a block that is a region in which coding is performed using intra-prediction, the picture encoding method comprising:

a step of generating an intra-prediction signal corresponding to a designated intra-prediction mode using a reference pixel of the intra-prediction that is referred to when the intra-prediction is performed , the reference pixel being present in the vicinity of the block, the reference pixel being determined in accordance with a size of the block and the intra-prediction mode, the reference pixel being present in an intra-reference pixel region in which reference pixels of the intra-prediction necessary for all intra-prediction modes are present;
a step of generating an intra-prediction residual signal representing a difference between the generated intra-prediction signal and the original signal; and
a step of encoding the intra-prediction residual signal.

The picture encoding method is characterized by comprising:

a step of setting, for the reference pixel, a tap length of an interpolation filter necessary for generating a value for the reference pixel based on one or both of a size of a block in the original signal which is a processing unit of the coding, transform, or prediction and a quantization parameter of the block,; and
a step of performing a filtering process which generates a value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating a value for the reference pixel, ,
wherein, in the step of setting the tap length of the interpolation filter, if the size of the block is less than or equal to a threshold value, the tap length is set to be longer than when the size of the block is greater than the threshold value and/or if a quantization step size represented by the quantization parameter of the block is less than or equal to a threshold value, the tap length is set to be longer than when the quantization step size is greater than the threshold value.

It is also proposed a picture decoding method for generating a prediction signal using spatial inter-pixel prediction and decoding a picture using a prediction residual signal which is a difference between the prediction signal and an original signal that includes a block that is a region in which coding is performed using intra-prediction,, the picture decoding method comprising:

a step of decoding an intra-prediction residual signal, an intra-prediction mode, and a size of an intra-prediction block in an input encoded stream;
a step of identifying a reference pixel of the intra-prediction that is referred to when the intra-prediction is performed based on the intra-prediction mode and the size of the intra-prediction block the reference pixel being present in the vicinity of the block, the reference pixel being present in an intra-reference pixel region in which reference pixels of the intra-prediction necessary for all intra-prediction modes are present;
a step of generating an intra-prediction signal corresponding to the decoded intra-prediction mode using the reference pixel; and
a step of generating a decoded signal of a decoding target region using the intra-prediction signal and the intra-prediction residual signal,

The picture decoding method is characterized by comprising:

a step of setting, for the reference pixel, a tap length of an interpolation filter necessary for generating a value for the reference pixel based on one or both of a size of a block in the original signal which is a processing unit of the coding, transform, or prediction and a quantization parameter of the block,; and
a step of performing a filtering process which generates a value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating a value for the reference pixel, ,

wherein, in the step of setting the tap length of the interpolation filter, if the size of the block is less than or equal to a threshold value, the tap length is set to be longer than when the size of the block is greater than the threshold value and/or if a quantization step size represented by the quantization parameter of the block is less than or equal to a threshold value, the tap length is set to be longer than when the quantization step size is greater than the threshold value.

It is also proposed a picture encoding apparatus which generates a prediction signal using spatial inter-pixel prediction and encodes a picture using a prediction residual signal which is a difference between the prediction signal and an original signal that includes a block that is a region in which coding is performed using intra-prediction, the picture encoding apparatus comprising:

a prediction signal generating unit which generates an intra-prediction signal corresponding to a designated intra-prediction mode using a reference pixel of intra-prediction that is referred to when the intra-prediction is performed , the reference pixel being present in the vicinity of the block, the reference pixel being determined in accordance with a size of the block and the intra-prediction mode, the reference pixel being present in an intra-reference pixel region in which reference pixels of the intra-prediction necessary for all intra-prediction modes are present;
a prediction residual signal generating unit which generates an intra-prediction residual signal representing a difference between the generated intra-prediction signal and the original signal; and
a prediction residual signal encoding unit which encodes the intra-prediction residual signal,

The encoding apparatus is characterized by comprising:

a tap length setting unit (506, 516) which sets, for the reference pixel, a tap length of an interpolation filter necessary for generating a value for the reference pixel based on one or both of a size of a block in the original signal which is a processing unit of the coding, transform, or prediction and a quantization parameter of the block; and
a filtering processing unit (507, 517) which performs a filtering process which generates a value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating a value for the reference pixel, ,
wherein if the size of the block is less than or equal to a threshold value, the tap length setting unit sets the tap length to be longer than when the size of the block is greater than the threshold value and/or if a quantization step size represented by the quantization parameter of the block is less than or equal to a threshold value, the tap length is set to be longer than when the quantization step size is greater than the threshold value.

It is also proposed a picture decoding apparatus which generates a prediction signal using spatial inter-pixel prediction and decodes a picture using a prediction residual signal which is a difference between the prediction signal and an original signal that includes a block that is a region in which coding is performed using intra-prediction, the picture decoding apparatus comprising:
a decoding unit which decodes an intra-prediction residual signal, an intra-prediction mode, and a size of an intra-prediction block in an input encoded stream;

an identifying unit which identifies a reference pixel of intra-prediction that is referred to when the intra-prediction is performed based on the intra-prediction mode and the size of the intra-prediction block the reference pixel being present in the vicinity of the block, the reference pixel being present in an intra-reference pixel region in which reference pixels of the intra-prediction necessary for all intra-prediction modes are present;
a prediction signal generating unit which generate an intra-prediction signal corresponding to the decoded intra-prediction mode using the reference pixel; and
a decoded signal generating unit which generates a decoded signal of a decoding target region using the generated intra-prediction signal and the intra-prediction residual signal,
the picture decoding apparatus is characterized by comprising:

a tap length setting unit which sets, for the reference pixel, a tap length of an interpolation filter necessary for generating a value for the reference pixel based on one or both of a size of a block in the original signal which is a processing unit of the coding, transform, or prediction and a quantization parameter of the block,; and
a filtering processing unit which performs a filtering process which generates a value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating a value for the reference pixel, ,

wherein if the size of the block is less than or equal to a threshold value, the tap length setting unit sets the tap length to be longer than when the size of the block is greater than the threshold value and/or if a quantization step size represented by the quantization parameter of the block is less than or equal to a threshold value, the tap length is set to be longer than when the quantization step size is greater than the threshold value.

It is also proposed a picture encoding program for causing a computer to execute the picture encoding method and a picture decoding program for causing a computer to execute the picture decoding method.

In the present invention, for the intra-reference pixel, the reference pixel value of the intra-prediction is generated based on adaptive selection of a filter to thereby reduce an intra-prediction residual.

First, a region (hereinafter referred to as an intra-reference pixel region) in which an intra-reference pixel is present is identified for a coding target intra-prediction block. The intra-reference pixel is a pixel in the vicinity of the intra-prediction block and it is determined in accordance with a size of the intra-prediction block and an intra-prediction mode.

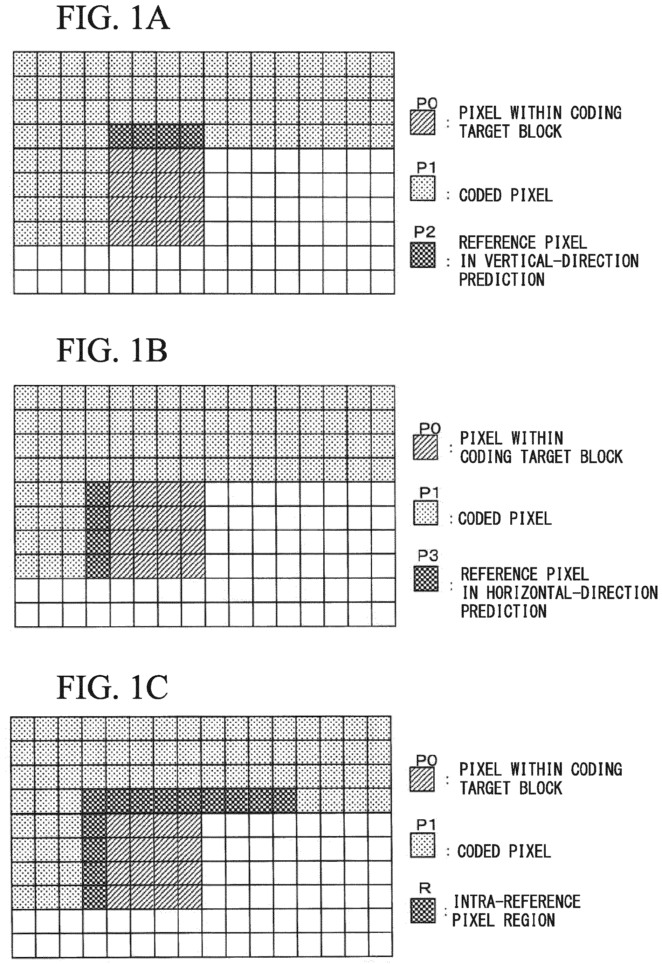

FIGS. 1A to 1C illustrate examples of intra-reference pixels. FIG. 1A illustrates an example of intra-reference pixels when the intra-prediction mode is prediction in a vertical direction, and FIG. 1B illustrates an example of intra-reference pixels when the intra-prediction mode is prediction in a horizontal direction.

In FIGS. 1A to 1C, a square region corresponds to a pixel. In addition, P0 represents a pixel within a coding target block, P1 represents a coded pixel, and P2 and P3 represent intra-reference pixels for pixel groups within the coding target block. In this manner, the reference pixel differs depending on the intra-prediction mode. A region in which intra-reference pixels necessary to implement all the prepared intra-prediction modes are present is referred to as an intra-reference pixel region. An example of the intra-reference pixel region is illustrated in FIG. 1C.

In the case of diagonal intra-prediction (prediction other than horizontal-direction prediction, vertical-direction prediction, and DC prediction), intra-reference pixels are generated by performing an interpolation process on pixel values within the intra-reference pixel region. In this generation, a filter to be used in interpolation is adaptively selected based on coding parameters having an influence on characteristics of a decoded picture to thereby reduce an intra-prediction error.

In the selection of the interpolation filter, an interpolation filter of a shorter tap length is selected when a size of the intra-prediction block is larger and an interpolation filter of a longer tap length is selected when a quantization parameter of the intra-prediction block is smaller.

This is for the following reasons. In general, when the size of the intra-prediction block becomes larger, there is a higher possibility that texture is flat and the nature of the intra-reference pixels can be constant. It is likely that it is not necessary to use a long tap length and it is sufficient to use a short tap length. Furthermore, because a distance from the reference pixel to a prediction target pixel is large (in particular, a distance from the reference pixel to a pixel closer to a lowest and rightmost pixel of the coding target block becomes greater and this tendency is remarkable as a block size increases), it is difficult to expect the effect of reduction in prediction error energy even when an interpolation filter for diagonal intra-prediction is corrected. In contrast, when the size of the intra-prediction block is decreased, it is likely to be within a region having complex texture and the undulation in the nature of intra-reference pixels is likely to be rich, and thus more flexible prediction pixels are likely to be generated by changing a tap length/shape of the filter. In addition, because the distance from the reference pixel to the prediction target pixel becomes small, it is possible to expect the effect of reduction in prediction error energy by correcting the interpolation filter for diagonal intra-prediction.

In addition, when the quantization parameter of the intra-prediction block is small, a decoded picture often has a complex pattern and an interpolation filter of a long tap length is appropriate to generate reference pixels with high prediction precision. In contrast, because the picture is often flat when the quantization parameter of the intra-prediction block is large, it is possible to maintain prediction precision even with an interpolation filter of a short tap length.

Specifically, in accordance with the present invention, in picture encoding for generating a prediction signal using spatial inter-pixel prediction and encoding a picture using a prediction residual signal (also referred to as a prediction error signal) which is a difference between the prediction signal and an original signal, a tap length of an interpolation filter necessary for generating a reference pixel of intra-prediction is set based on one or both of a size of a block which is a processing unit of coding, transform, or prediction and a quantization parameter of the block for the reference pixel; a filtering process which generates the reference pixel is performed using the interpolation filter corresponding to the set tap length; an intra-prediction signal corresponding to a designated intra-prediction mode is generated using the generated reference pixel; an intra-prediction residual signal representing a difference between the generated intra-prediction signal and the original signal is generated; and the intra-prediction residual signal is encoded.

In addition, in accordance with the present invention, in picture decoding for generating a prediction signal using spatial inter-pixel prediction and decoding a picture using a prediction residual signal which is a difference between the prediction signal and an original signal, an intra-prediction residual signal, an intra-prediction mode, and a size of an intra-prediction block in an input encoded stream are decoded; a reference pixel of intra-prediction is identified based on the intra-prediction mode and the size of the intra-prediction block; a tap length of an interpolation filter necessary for generating the reference pixel of the intra-prediction is set based on one or both of a size of a block which is a processing unit of coding, transform, or prediction and a quantization parameter of the block for the reference pixel; a filtering process which generates the reference pixel is performed using the interpolation filter corresponding to the set tap length; an intra-prediction signal corresponding to the decoded intra-prediction mode is generated using the generated reference pixel; and a decoded signal of a decoding target region is generated using the generated intra-prediction signal and the intra-prediction residual signal.

In addition, in the picture encoding or the picture decoding, when the tap length of the interpolation filter is set, if the size of the block is less than or equal to a threshold value, the tap length may be set to be longer than when the size of the block is greater than the threshold value. Alternatively, if a quantization step size represented by the quantization parameter of the block is less than or equal to a threshold value, the tap length may be set to be longer than when the quantization step size is greater than the threshold value.

Advantageous Effects of the Invention

In accordance with the present invention, it is possible to generate an intra-reference pixel value close to an original signal at a prediction target pixel position. As a result, it is possible to reduce a bit amount through reduction in intra-prediction error energy.

BRIEF DESCRIPTION OF DRAWINGS

FIG. 1A is a diagram illustrating an example of intra-reference pixels.
FIG. 1B is a diagram illustrating an example of intra-reference pixels.
FIG. 1C is a diagram illustrating an example of intra-reference pixels.
FIG. 2 is a diagram illustrating a configuration example of a moving-picture encoding apparatus to which the present invention is applied.
FIG. 3 is a diagram illustrating a configuration example of a moving-picture decoding apparatus to which the present invention is applied.
FIG. 4 is a diagram illustrating a configuration example of an intra-prediction processing unit.
FIG. 5 is a flowchart of an intra-prediction process.
FIG. 6 is a diagram illustrating a first configuration example of a reference pixel generating unit.
FIG. 7 is a flowchart of an intra-reference pixel generating process (example 1).
FIG. 8 is a diagram illustrating a second configuration example of the reference pixel generating unit.
FIG. 9 is a flowchart of an intra-reference pixel generating process (example 2).
FIG. 10 is a diagram illustrating a configuration example of a system when a moving-picture encoding apparatus is implemented using a computer and a software program.
FIG. 11 is a diagram illustrating a configuration example of a system when a moving-picture decoding apparatus is implemented using a computer and a software program.
FIG. 12A is a diagram illustrating an example of an intra-prediction pixel generation method in conventional intra-frame prediction.
FIG. 12B is a diagram illustrating an example of the intra-prediction pixel generation method in the conventional intra-frame prediction.

MODES FOR CARRYING OUT THE INVENTION

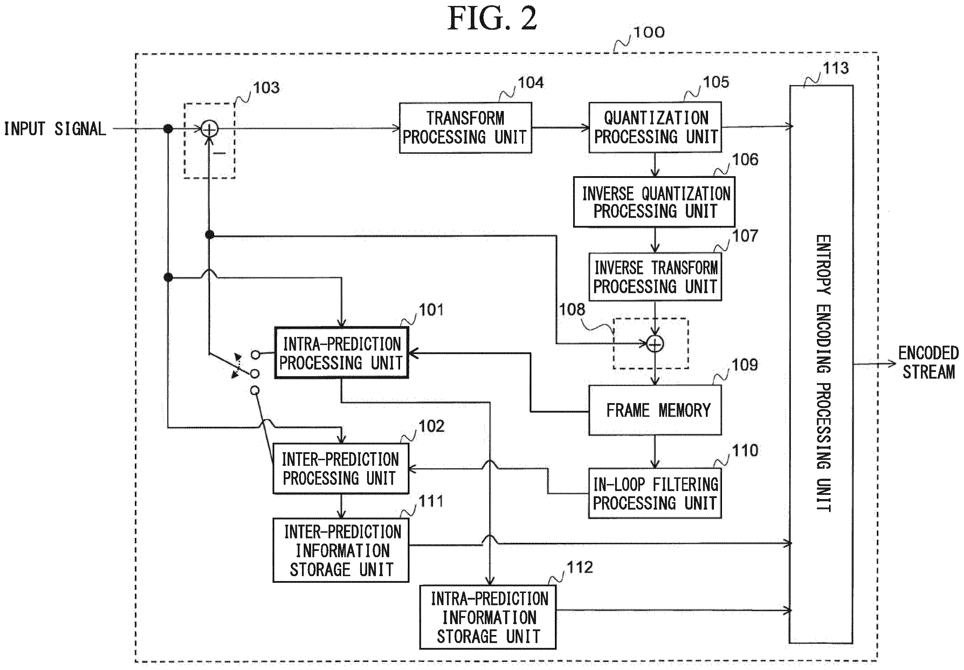

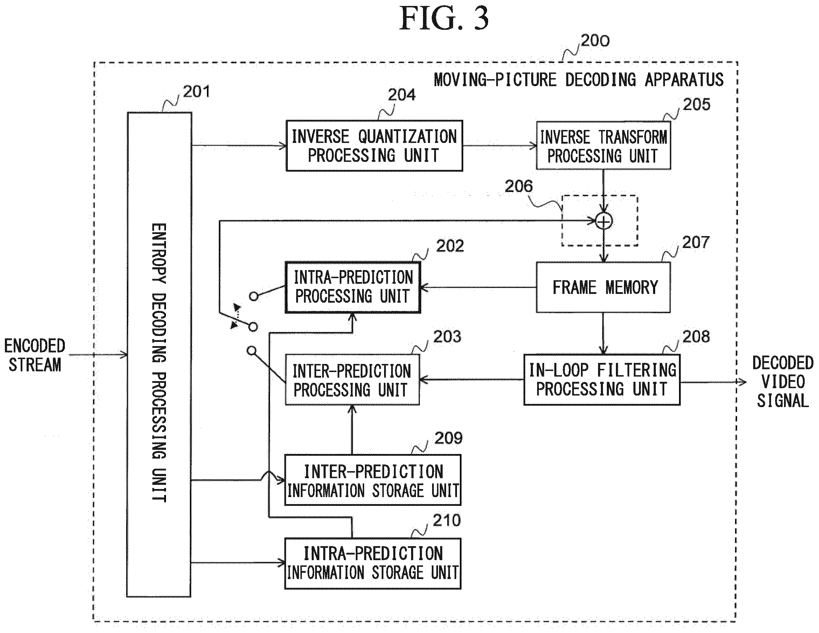

The present invention is technology related to intra-prediction processing units (101 of FIG. 2 and 202 of FIG. 3) in a moving-picture encoding apparatus (FIG. 2) and a moving-picture decoding apparatus (FIG. 3). These intra-prediction processing units perform a process common to the encoding apparatus and the decoding apparatus.

Hereinafter, examples of the moving-picture encoding apparatus and the moving-picture decoding apparatus to which the present invention is applied will first be shown and then a detailed description of the intra-prediction processing units improved by the present invention will be given.

[Configuration example of moving-picture encoding apparatus]

FIG. 2 is a diagram illustrating a configuration example of the moving-picture encoding apparatus to which the present invention is applied. In the present embodiment, in particular, the intra-prediction processing unit 101 in a moving-picture encoding apparatus 100 is a portion different from the conventional technology, and the other portions are similar to configurations of the conventional general moving-picture encoding apparatus used as an encoder in H.264/AVC and the like.

The moving-picture encoding apparatus 100 receives an input of an encoding target video signal, divides a frame of the input video signal into blocks, performs encoding for every block, and outputs its bit stream as an encoded stream. To perform the encoding, a prediction residual signal generating unit 103 calculates a difference between the input video signal and a prediction signal which is an output of the intra-prediction processing unit 101 or an inter-prediction processing unit 102, and outputs it as a prediction residual signal. A transform processing unit 104 performs an orthogonal transform such as a discrete cosine transform (DCT) on the prediction residual signal to output transform coefficients. A quantization processing unit 105 quantizes the transform coefficients and outputs quantized transform coefficients. An entropy encoding processing unit 113 performs entropy encoding on the quantized transform coefficients and outputs a resultant signal as the encoded stream.

On the other hand, the quantized transform coefficients are also input to an inverse quantization processing unit 106 in which the quantized transform coefficients are subjected to inverse quantization. An inverse transform processing unit 107 performs an inverse orthogonal transform on transform coefficients which are output from the inverse quantization processing unit 106 and outputs a decoded prediction residual signal.

A decoded signal generating unit 108 generates a decoded signal of an encoded encoding target block by adding the prediction signal which is the output of the intra-prediction processing unit 101 or the inter-prediction processing unit 102 to the decoded prediction residual signal. Because the intra-prediction processing unit 101 or the inter-prediction processing unit 102 uses the decoded signal as a reference picture, the decoded signal is stored in a frame memory 109. It is to be noted that when the reference picture is referred to in the inter-prediction processing unit 102, an in-loop filtering processing unit 110 receives an input of a picture stored in the frame memory 109 and performs a filtering process of reducing coding distortion, and a picture subjected to the filtering process is used as the reference picture.

Information about the prediction mode and the like set in the intra-prediction processing unit 101 is stored in an intra-prediction information storage unit 112, is then entropy-encoded in the entropy encoding processing unit 113, and a resultant signal is output as the encoded stream. Information about a motion vector and the like set in the inter-prediction processing unit 102 is stored in an inter-prediction information storage unit 111, is then entropy-encoded in the entropy encoding processing unit 113, and a resultant signal is output as the encoded stream.

[Configuration example of moving-picture decoding apparatus]

FIG. 3 is a diagram illustrating a configuration example of the moving-picture decoding apparatus to which the present invention is applied. In the present embodiment, in particular, the intra-prediction processing unit 202 in a moving-picture decoding apparatus 200 is a portion different from the conventional technology, and the other portions are similar to configurations of the conventional general moving-picture decoding apparatus used as a decoder in H.264/AVC and the like.

The moving-picture decoding apparatus 200 receives an input of the encoded stream encoded by the moving-picture encoding apparatus 100 illustrated in FIG. 2, and performs decoding thereon to output a video signal of decoded pictures. For this decoding, an entropy decoding processing unit 201 receives the input of the encoded stream, entropy-decodes quantized transform coefficients of a decoding target block, and decodes information about intra-prediction and information about inter-prediction. The decoded result of the information about the inter-prediction is stored in an inter-prediction information storage unit 209, and the decoded result of the information about the intra-prediction is stored in an intra-prediction information storage unit 210.

An inverse quantization processing unit 204 receives an input of the quantized transform coefficients and performs inverse quantization thereon to output decoded transform coefficients. An inverse transform processing unit 205 applies an inverse orthogonal transform on the decoded transform coefficients to output a decoded prediction residual signal. A decoded signal generating unit 206 generates a decoded signal of the decoding target block by adding a prediction signal which is an output of the intra-prediction processing unit 202 or an inter-prediction processing unit 203 to the decoded prediction residual signal. Because the intra-prediction processing unit 202 or the inter-prediction processing unit 203 uses the decoded signal as a reference picture, the decoded signal is stored in a frame memory 207. It is to be noted that when the inter-prediction processing unit 203 refers to the reference picture, an in-loop filtering processing unit 208 receives an input of a picture stored in the frame memory 207 and performs a filtering process of reducing coding distortion, and a picture subjected to the filtering process is used as the reference picture. Ultimately, the picture subjected to the filtering process is output as a video signal.

[Configuration example of intra-prediction processing unit]

The present embodiment is technology related to an intra-prediction process in the intra-prediction processing unit 101 of FIG. 2 or the intra-prediction processing unit 202 of FIG. 3.

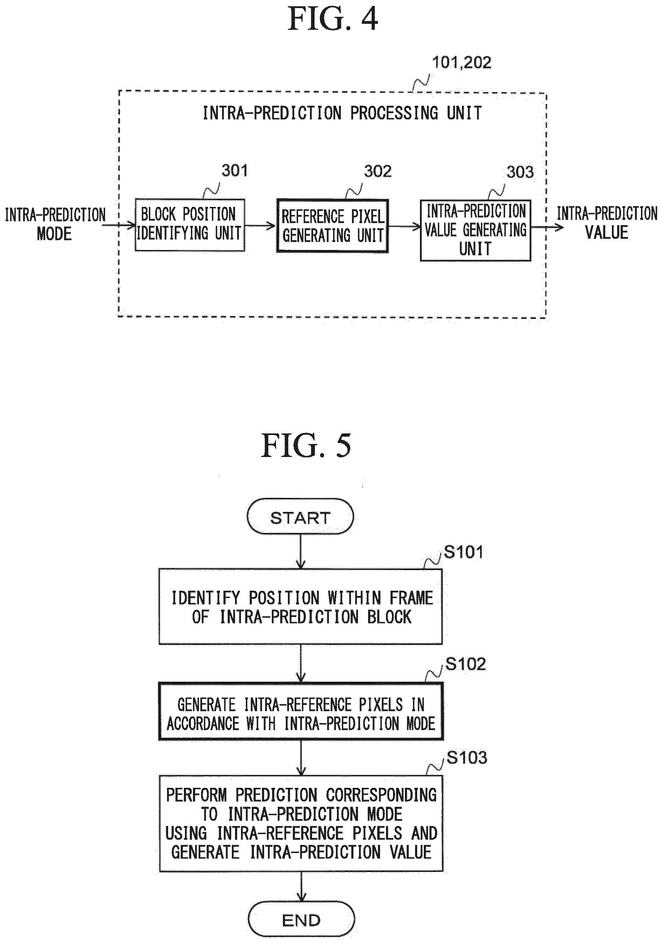

FIG. 4 illustrates a configuration example of the intra-prediction processing units. An intra-prediction processing unit illustrated in FIG. 4 performs a common process in the moving-picture encoding apparatus 100 and the moving-picture decoding apparatus 200.

A block position identifying unit 301 identifies a position of an intra-prediction block within a frame. A reference pixel generating unit 302 receives inputs of the intra-prediction mode and the position of the intra-prediction block within the frame, and generates intra-reference pixels for the block. An intra-prediction value generating unit 303 receives inputs of the intra-prediction mode and the intra-reference pixels and outputs an intra-prediction value by performing prediction corresponding to the intra-prediction mode.

[Flow of intra-prediction process]

FIG. 5 is a flowchart of the intra-prediction process to be executed by the intra-prediction processing unit illustrated in FIG. 4.

First, in step S101, a position of an intra-prediction block within a frame is identified. Next, in step S102, an intra-prediction mode and the position of the intra-prediction block within the frame are input, and intra-reference pixels for the block are generated. Next, in step S103, the intra-prediction mode and the intra-reference pixels are input, an intra-prediction value is generated by performing prediction corresponding to the intra-prediction mode, and the intra-prediction value is output.

[Configuration example 1 of reference pixel generating unit]

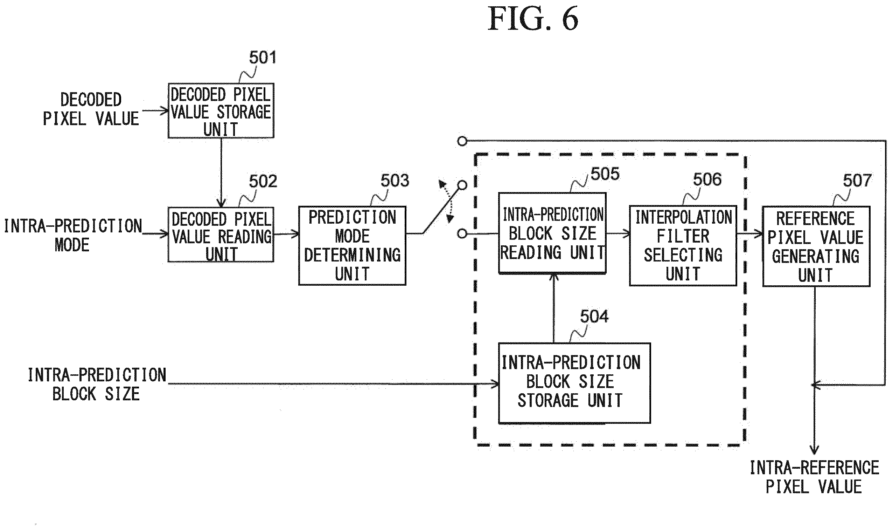

FIG. 6 illustrates the first configuration example of the reference pixel generating unit 302 in the intra-prediction processing unit illustrated in FIG. 4. The reference pixel generating unit 302 performs an intra-reference pixel generating process using the following configuration.

A decoded pixel value storage unit 501 stores decoded pixel values necessary to generate a reference pixel. At this time, for example, after a filter for noise reduction such as a low pass filter may be applied to the decoded pixel values as in H.264/AVC, filtered decoded pixel values may be stored. Specifically, this filter performs a process such as $(X+2xA+B) >> 2$ or $(A+2xB+C) >> 2$ (where $>>$ represents an operation of shifting bits to the right) rather than directly copying the value of A in FIG. 12A. A decoded pixel value reading unit 502 receives an input of the intra-prediction mode and reads decoded pixel values stored in the decoded pixel value storage unit 501 in accordance with the intra-prediction mode. A prediction mode determining unit 503 receives inputs of the intra-prediction mode and the decoded pixel values read by the decoded pixel value reading unit 502, determines whether interpolation of a decimal pixel position is necessary to generate a reference pixel for use in the prediction mode, and selects a reference pixel value necessary for intra-prediction from the decoded pixel positions if the interpolation is unnecessary. Otherwise, the process moves to that of an intra-prediction block size reading unit 505.

In the present embodiment, an intra-prediction block size storage unit 504, the intra-prediction block size reading unit 505, and an interpolation filter selecting unit 506 represented by a dotted-line frame in FIG. 6 are portions different from the conventional technology.

The intra-prediction block size storage unit 504 stores a size of an intra-prediction target block (intra-prediction block). In the case of H.264/AVC, there are three types of 4x4, 8x8, and 16x16 as the block size. It is to be noted that the present embodiment is not limited to these sizes; for example, the block size such as 32x32 may be targeted. A block size of a block other than a square shape, such as mxn (m and n are different positive integer values), may be similarly targeted.

The intra-prediction block size reading unit 505 reads the size of the intra-prediction block stored in the intra-prediction block size storage unit 504.

The interpolation filter selecting unit 506 receives inputs of the size of the intra-prediction block and the intra-prediction mode, and selects an interpolation filter to be used to generate the intra-reference pixel in accordance with the size of the intra-prediction block and the intra-prediction mode. In particular, in the selection of the interpolation filter, a threshold value assigned in advance is read, an interpolation filter of a shorter tap length is selected if the size of the intra-prediction block is larger and an interpolation filter of a longer tap length is selected if the size of the intra-prediction block is smaller. For example, when the block size of the threshold value is 8x8 and the block size of the intra-prediction is a size larger than 8x8, an interpolation filter having a tap length of 2 is selected; when the block size is less than or equal to 8x8, an interpolation filter having a tap length of 4 is selected (a tap length greater than or equal to 4, such as 6 or 8 is also possible). In addition, there may be a plurality of threshold values. For example, when two types of threshold values are 8x8 and 16x16, the tap length may be set to 6 for 4x4 and 8x8, the tap length may be set to 4 for 16x16, and the tap length may be set to 2 for a size greater than $16 \times 16$. Furthermore, instead of the size of the intra-prediction block for use in the prediction process, it is possible to read sizes of blocks of a coding process and a transform process including an in-process block and set a tap length from the sizes using a threshold value assigned in advance.

Instead of assigning the threshold value, it is possible to set the tap length by reading a table assigned in advance and reading a tap length corresponding to an input block size in accordance with the block size. It is assumed that block sizes and tap lengths are associated with each other in the above-described table, a shorter tap length is set as the block size becomes larger, and a longer tap length is set as the block size becomes smaller.

Filter coefficients to be used when the tap length is determined can be determined, for example, as follows. Two pixels at integer positions are assumed to be P(i, j) and P(i+1, j). Here, i and j are assumed to be spatial coordinates in an x (horizontal) direction and a y (vertical) direction, respectively. Assuming that P(i+1/8, j) obtained by shifting the position of P(i, j) by a 1/8 pixel is to be interpolated and two taps are used, the interpolation can be performed as follows using a filter having coefficients of [7/8, 1/8].

$$P(i+1/8, j) = P(i, j) \times 7/8 + P(i+1, j) \times 1/8$$

In addition, when four taps are used, the interpolation can be performed as follows using a filter having coefficients of [-5/64, 55/64, 17/64, -3/64].

$$P(i+1/8, j) = P(i-1, j) \times (-5/64) + P(i, j) \times 55/64 + P(i+1, j) \times 17/64 + P(i+2, j) \times (-3/64)$$

The general interpolation filter for use in coding and picture processing can be similarly applied to the present embodiment.

The reference pixel value generating unit 507 receives inputs of the intra-prediction mode, the decoded pixel values read by the decoded pixel value reading unit 502, and the interpolation filter selected by the interpolation filter selecting unit 506, and performs an interpolation process using the selected interpolation filter to generate a reference pixel value necessary for intra-prediction.

It is to be noted that the conventional technology is different from the present embodiment in that only the intra-prediction mode output by the prediction mode determining unit 503 is input and the interpolation filter to be used to generate the intra-reference pixel is selected in accordance with the intra-prediction mode without performing the reading of the intra-prediction block size and the like.

[Flow of intra-reference pixel generation process (example 1)]

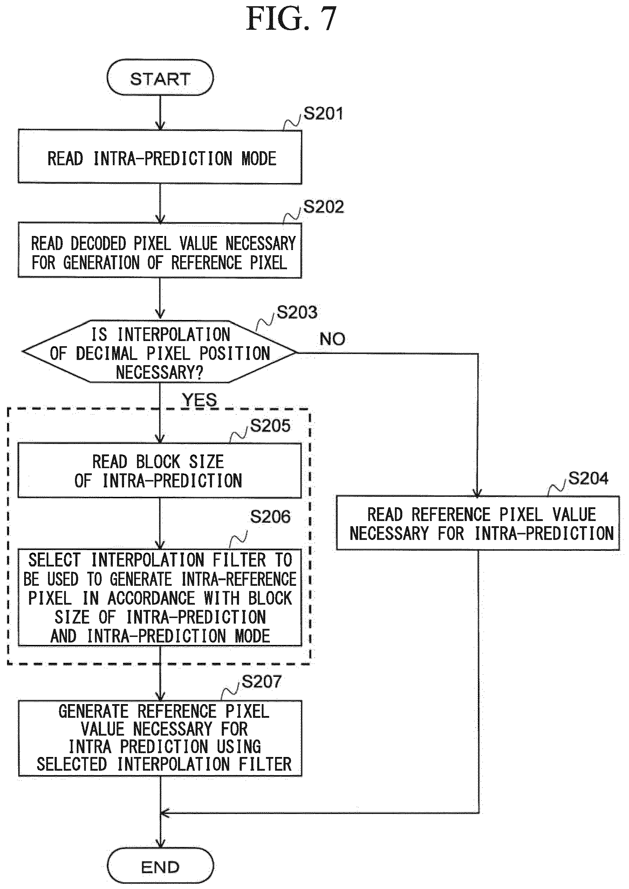

FIG. 7 is a flowchart of the intra-reference pixel generating process (example 1). Hereinafter, the first example of the intra-reference pixel generating process to be executed by the reference pixel generating unit 302 illustrated in FIG. 4 will be described in detail with reference to FIG. 7.

First, in step S201, an intra-prediction mode is read. Next, in step S202, the intra-prediction mode is input and decoded pixel values necessary for generating a reference pixel are read. In step S203, the intra-prediction mode is input, and it is determined whether interpolation of a decimal pixel position is necessary to generate the reference pixel for use in the prediction mode. If the interpolation is necessary, the process moves to step S205. Otherwise, the process moves to step S204.

In step S204, the intra-prediction mode and the decoded pixel values read in step S202 are input, a reference pixel value necessary for intra-prediction is selected from the decoded pixel values, and the selected reference pixel value is set as an intra-reference pixel.

In contrast, if the interpolation of the decimal pixel position is necessary, in step S205, the size of the intra-prediction target block (intra-prediction block) is read. In the case of H.264/AVC, there are three types of 4x4, 8x8, and 16x16 as the block size, but block sizes greater than or equal to those or other block sizes such as mxn (m and n are different positive integer values) may be provided.

In step S206, the size of the intra-prediction block and the intra-prediction mode are input and an interpolation filter to be used to generate the intra-reference pixel is selected in accordance with the size of the intra-prediction block and the intra-prediction mode. In the selection of the interpolation filter, an interpolation filter of a shorter tap length is selected when the size of the intra-prediction block is larger, and an interpolation filter of a longer tap length is selected when the size of the intra-prediction block is smaller. As described above, it is possible to select the interpolation filter of the tap length set in accordance with the block size based on the threshold value or the table assigned in advance.

In step S207, the intra-prediction mode, the decoded pixel values read in step S202, and the interpolation filter selected in step S206 are input and an interpolation process using the interpolation filter is performed to generate a reference pixel value necessary for intra-prediction.

A difference of FIG. 7 from the conventional technology is portions of steps S205 and S206 represented by a dotted-line frame. In the conventional technology, the intra-prediction mode is input and the interpolation filter to be used to generate the intra-reference pixel is selected in accordance with only the intra-prediction mode. The present embodiment is different from the conventional technology in that the block size of the intra-prediction and the intra-prediction mode are read and the interpolation filter to be used to generate the intra-reference pixel is selected in accordance with the size of the intra-prediction block and the intra-prediction mode. It is to be noted that instead of the size of the intra-prediction block for use in the prediction process, it is possible to read sizes of blocks of a coding process and a transform process including an in-process block, and similarly set a tap length from the sizes using a threshold value assigned in advance.

[Configuration example 2 of reference pixel generating unit]

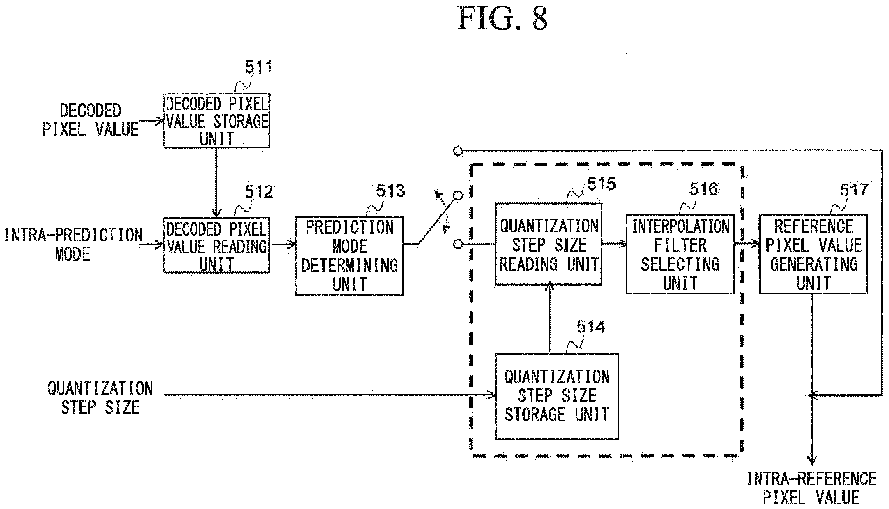

FIG. 8 illustrates the second configuration example of the reference pixel generating unit 302 in the intra-prediction processing unit illustrated in FIG. 4. The reference pixel generating unit 302 can perform the intra-reference pixel generating process using the configuration illustrated in FIG. 8.

In FIG. 8, processes to be performed by a decoded pixel value storage unit 511, a decoded pixel value reading unit 512, a prediction mode determining unit 513, and a reference pixel value generating unit 517 are similar to those described with reference to FIG. 6.

In the present embodiment, a quantization step size storage unit 514 stores a parameter (referred to as a QP parameter) representing a quantization step size to be used in quantization of an intra-prediction target block (intra-prediction block).

A quantization step size reading unit 515 reads the QP parameter stored in the quantization step size storage unit 514. An interpolation filter selecting unit 516 receives inputs of the QP parameter and the intra-prediction mode and selects an interpolation filter to be used to generate an intra-reference pixel in accordance with the QP parameter and the intra-prediction mode. In particular, in the selection of the interpolation filter, an interpolation filter of a longer tap length is selected when the QP parameter is smaller in accordance with predetermined correspondence information between QP parameters and tap lengths.

[Flow of intra-reference pixel generating process (example 2)]

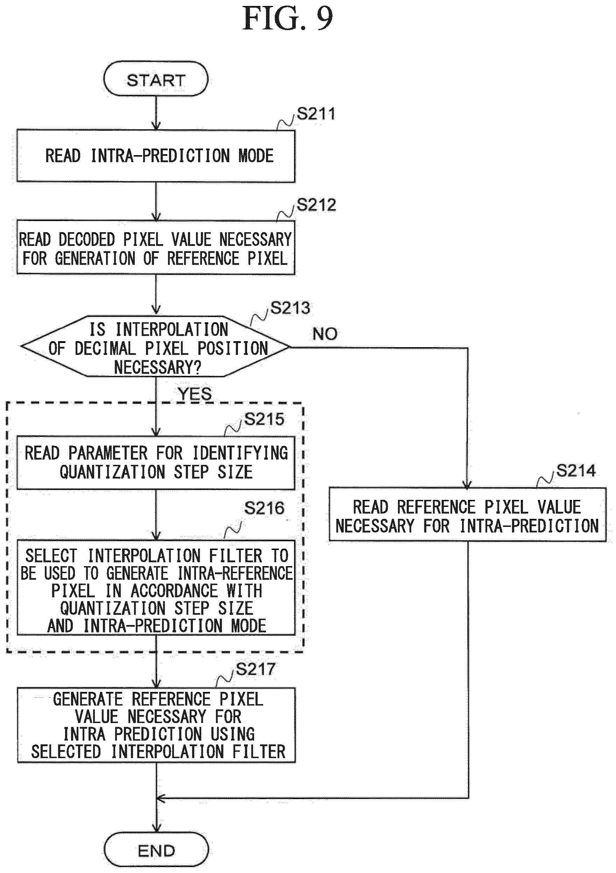

FIG. 9 is a flowchart of the intra-reference pixel generating process (example 2). Hereinafter, the second example of the intra-reference pixel generating process to be executed by the reference pixel generating unit 302 illustrated in FIG. 8 will be described with reference to FIG. 9.

The processes to be performed in steps S211 to S214 and S217 illustrated in FIG. 9 are similar to those to be performed in steps S201 to S204 and S207 described with reference to FIG. 7.

In the present embodiment, in step S215, a parameter (referred to as a QP parameter) representing a quantization step size to be used to quantize an intra-prediction target block (intra-prediction block) is read.

Next, in step S216, the QP parameter and the intra-prediction mode are input and an interpolation filter to be used to generate an intra-reference pixel is selected in accordance with the QP parameter and the intra-prediction mode. In the selection of the interpolation filter, an interpolation filter of a longer tap length is selected when the QP parameter is smaller compared to when the QP parameter is larger.

Although an example in which the interpolation filter is selected in accordance with the size of the intra-prediction block and an example in which the interpolation filter is selected in accordance with the quantization parameter have been described above, it is possible to set the tap length of the interpolation filter in consideration of both of them. For example, when the magnitudes of quantization parameters of intra-prediction blocks are the same, an interpolation filter of a shorter tap length is set for an intra-prediction block having a larger size and an interpolation filter of a longer tap length is set for an intra-prediction block having a smaller size. In addition, when the sizes of intra-prediction blocks are the same, an interpolation filter of a longer tap length is set for a smaller quantization parameter and an interpolation filter of a shorter tap length is set for a larger quantization parameter. For example, an implementation which adaptively selects an appropriate interpolation filter is also possible by generating, for all the intra-prediction modes, tables which store correspondence information representing which interpolation filter of which tap length is to be used for a combination of a size of each intra-prediction block and a quantization parameter value in advance and selecting the interpolation filter based on the tables.

The above moving-picture encoding and decoding processes can be implemented by a computer and a software program, and the program can be recorded on a computer-readable recording medium and provided through a network.

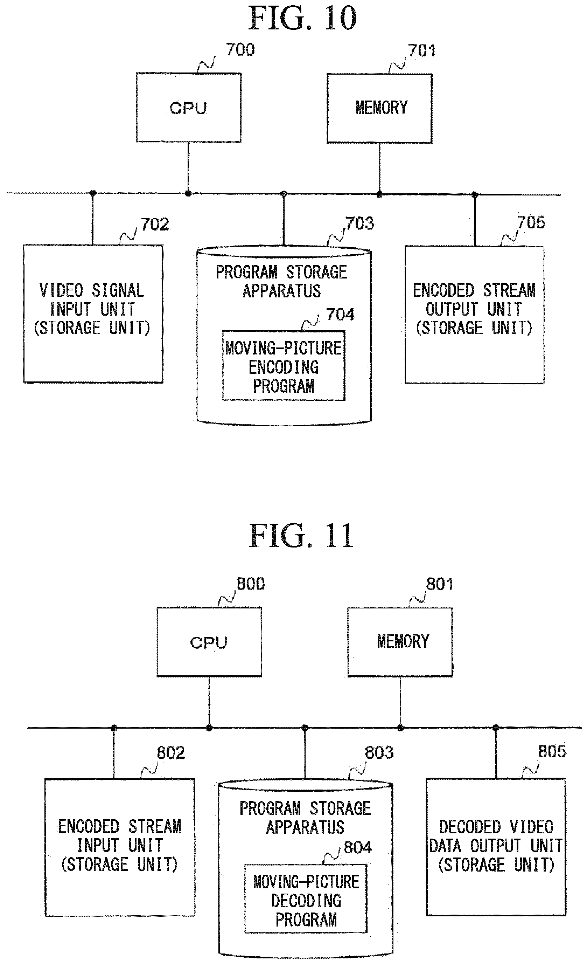

FIG. 10 illustrates a configuration example of hardware in which the moving-picture encoding apparatus is configured by a computer and a software program. The present system has a configuration in which a central processing unit (CPU) 700 which executes the program, a memory 701 such as a random access memory (RAM) which stores the program and data accessed by the CPU 700, a video signal input unit 702 (which may be a storage unit which stores a video signal using a disk apparatus or the like) which inputs an encoding target video signal from a camera or the like, a program storage apparatus 703 which stores a moving-picture encoding program 704 which is the software program for causing the CPU 700 to execute the encoding process described in the embodiment of the present invention, and an encoded stream output unit 705 (which may be a storage unit which stores an encoded stream using a disk apparatus or the like) which outputs an encoded stream generated by the CPU 700 executing the moving-picture encoding program 704 loaded to the memory 701, for example, via a network, are connected by a bus.

FIG. 11 illustrates a configuration example of hardware in which the moving-picture decoding apparatus is configured by a computer and a software program. The present system has a configuration in which a CPU 800 which executes the program, a memory 801 such as a RAM which stores the program and data accessed by the CPU 800, an encoded stream input unit 802 (which may be a storage unit which stores an encoded stream using a disk apparatus or the like) which receives an input of an encoded stream encoded by the moving-picture encoding apparatus in accordance with the present technique, a program storage apparatus 803 which stores a moving-picture decoding program 804 which is the software program for causing the CPU 800 to execute the decoding process described in the embodiment of the present invention, and a decoded video data output unit 805 (which may be a storage unit which stores decoded video data using a disk apparatus or the like) which outputs, to a reproduction apparatus and the like, decoded video obtained by the CPU 800 executing the moving-picture decoding program 804 loaded to the memory 801 to perform decoding on the encoded stream are connected by a bus.

While an embodiment of the present invention has been described with reference to the drawings, it is apparent that this embodiment is exemplification of the present invention and the present invention is not limited to the above embodiment. Therefore, additions, omissions, substitutions, and other modifications of structural elements can be made without departing from the technical scope of the present invention.

INDUSTRIAL APPLICABILITY

For example, the present invention can be applied to encoding and decoding of a picture using intra-prediction. In accordance with the present invention, it is possible to generate an intra-reference pixel value close to an original signal at a prediction target pixel position and reduce a bit amount through reduction in intra-prediction error energy.

Description of Reference Signs

100 Moving-picture encoding apparatus
101, 202 Intra-prediction processing unit
200 Moving-picture decoding apparatus
302 Reference pixel generating unit
501, 511 Decoded pixel value storage unit
502, 512 Decoded pixel value reading unit
503, 513 Prediction mode determining unit
504 Intra-prediction block size storage unit
505 Intra-prediction block size reading unit
506, 516 Interpolation filter selecting unit
507, 517 Reference pixel value generating unit
514 Quantization step size storage unit
515 Quantization step size reading unit

**Claims**

1. A picture encoding method for generating a prediction signal using spatial inter-pixel prediction and encoding a picture using a prediction residual signal which is a difference between the prediction signal and an original signal that includes a block that is a processing unit of coding, transform, or prediction and that is a region in which coding is performed using intra-prediction, the picture encoding method comprising:

   a step (S103) of generating an intra-prediction signal corresponding to a designated intra-prediction mode using a reference pixel of the intra-prediction that is referred to when the intra-prediction is performed, the reference pixel being present in the vicinity of the block, the reference pixel being determined in accordance with a size of the block and the intra-prediction mode, the reference pixel being present in an intra-reference pixel region in which reference pixels of the intra-prediction necessary for all intra-prediction modes are present;
a step of generating an intra-prediction residual signal representing a difference between the generated intra-prediction signal and the original signal; and
a step of encoding the intra-prediction residual signal,
the method being **characterized by** comprising:

a step (S206, S216) of setting, for the reference pixel, a tap length of an interpolation filter necessary for generating a value for the reference pixel based on one or both of the size of the block in the original signal and a quantization parameter of the block; and
a step (S207, S217) of performing a filtering process which generates the value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating the value for the reference pixel,

wherein, in the step of setting the tap length of the interpolation filter, if the size of the block is less than or equal to a threshold value, the tap length is set to be longer than when the size of the block is greater than the threshold value and/or if a quantization step size represented by the quantization parameter of the block is less than or equal to a threshold value, the tap length is set to be longer than when the quantization step size is greater than the threshold value.

2. The picture encoding method according to claim 1, wherein, in the step of setting the tap length of the interpolation filter, the tap length corresponding to the size of the block is acquired from a predetermined table including information representing that a shorter tap length is used when the size of the block is larger and a longer tap length is used when the size of the block is smaller, and the acquired tap length is set.

3. The picture encoding method according to claim 1, wherein, in the step of setting the tap length of the interpolation filter, the tap length corresponding to the quantization parameter of the block is acquired from a predetermined table including information representing that a shorter tap length is used when the quantization parameter of the block is larger and a longer tap length is used when the quantization parameter of the block is smaller, and the acquired tap length is set.

4. A picture decoding method for generating a prediction signal using spatial inter-pixel prediction and decoding a picture using a prediction residual signal which is a difference between the prediction signal and an original signal that includes a block that is a processing unit of coding, transform, or prediction and that is a region in which coding is performed using intra-prediction, the picture decoding method comprising:

a step of decoding an intra-prediction residual signal, an intra-prediction mode, and a size of an intra-prediction block in an input encoded stream;
a step (S101) of identifying a reference pixel of the intra-prediction that is referred to when the intra-prediction is performed based on the intra-prediction mode and the size of the intra-prediction block, the reference pixel being present in the vicinity of the block, the reference pixel being present in an intra-reference pixel region in which reference pixels of the intra-prediction necessary for all intra-prediction modes are present;
a step (S103) of generating an intra-prediction signal corresponding to the decoded intra-prediction mode using the reference pixel; and
a step of generating a decoded signal of a decoding target region using the intra-prediction signal and the intra-prediction residual signal,
the method being **characterized by** comprising:

a step (S206, S216) of setting, for the reference pixel, a tap length of an interpolation filter necessary for generating a value for the reference pixel based on one or both of a size of the block in the original signal and a quantization parameter of the block; and
a step (S207, S217) of performing a filtering process which generates the value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating the value for the reference pixel,

wherein, in the step of setting the tap length of the interpolation filter, if the size of the block is less than or equal to a threshold value, the tap length is set to be longer than when the size of the block is greater than the threshold value and/or if a quantization step size represented by the quantization parameter of the block is less than or equal to a threshold value, the tap length is set to be longer than when the quantization step size is greater than the threshold value.

5. The picture decoding method according to claim 4, wherein, in the step of setting the tap length of the interpolation filter, the tap length corresponding to the size of the block is acquired from a predetermined table including information representing that a shorter tap length is used when the size of the block is larger and a longer tap length is used when the size of the block is smaller, and the acquired tap length is set.

6. The picture decoding method according to claim 4, wherein, in the step of setting the tap length of the interpolation filter, the tap length corresponding to the quantization parameter of the block is acquired from a predetermined table including information representing that a shorter tap length is used when the quantization parameter of the block is larger and a longer tap length is used when the quantization parameter of the block is smaller, and the acquired tap length is set.

7. A picture encoding apparatus which generates a prediction signal using spatial inter-pixel prediction and encodes a picture using a prediction residual signal which is a difference between the prediction signal and an original signal that includes a block that is a processing unit of coding, transform, or prediction and that is a region in which coding is performed using intra-prediction, the picture encoding apparatus comprising:

a prediction signal generating unit (303) which generates an intra-prediction signal corresponding to a designated intra-prediction mode using a reference pixel of the intra-prediction that is referred to when the intra-prediction is performed, the reference pixel being present in the vicinity of the block, the reference pixel being determined in accordance with a size of the block and the intra-prediction mode, the reference pixel being present in an intra-reference pixel region in which reference pixels of the intra-prediction necessary for all intra-prediction modes are present;
a prediction residual signal generating unit (103) which generates an intra-prediction residual signal representing a difference between the generated intra-prediction signal and the original signal; and
a prediction residual signal encoding unit (104, 105, 113) which encodes the intra-prediction residual signal, the apparatus being **characterized by** comprising:

a tap length setting unit (506, 516) which sets, for the reference pixel, a tap length of an interpolation filter necessary for generating a value for the reference pixel based on one or both of the size of the block in the original signal and a quantization parameter of the block; and
a filtering processing unit (507, 517) which performs a filtering process which generates the value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating the value for the reference pixel,

wherein if the size of the block is less than or equal to a threshold value, the tap length setting unit sets the tap length to be longer than when the size of the block is greater than the threshold value and/or if a quantization step size represented by the quantization parameter of the block is less than or equal to a threshold value, the tap length is set to be longer than when the quantization step size is greater than the threshold value.

8. A picture decoding apparatus which generates a prediction signal using spatial inter-pixel prediction and decodes a picture using a prediction residual signal which is a difference between the prediction signal and an original signal that includes a block that is a processing unit of coding, transform, or prediction and that is a region in which coding is performed using intra-prediction, the picture decoding apparatus comprising:

a decoding unit (201) which decodes an intra-prediction residual signal, an intra-prediction mode, and a size of an intra-prediction block in an input encoded stream;
an identifying unit (502) which identifies a reference pixel of the intra-prediction that is referred to when the intra-prediction is performed based on the intra-prediction mode and the size of the intra-prediction block, the reference pixel being present in the vicinity of the block, the reference pixel being present in an intra-reference pixel region in which reference pixels of the intra-prediction necessary for all intra-prediction modes are present;
a prediction signal generating unit (303) which generates an intra-prediction signal corresponding to the decoded intra-prediction mode using the reference pixel; and
a decoded signal generating unit (206) which generates a decoded signal of a decoding target region using the generated intra-prediction signal and the intra-prediction residual signal,
the apparatus being **characterized by** comprising:

a tap length setting unit (506, 516) which sets, for the reference pixel, a tap length of an interpolation filter necessary for generating a value for the reference pixel based on one or both of a size of the block in the original signal and a quantization parameter of the block; and
a filtering processing unit (507, 517) which performs a filtering process which generates the value for the reference pixel by an interpolation process using the interpolation filter corresponding to the set tap length based on the intra-prediction mode and decoded pixels that are present in the intra-reference pixel region for the block and that are determined in accordance with the intra-prediction mode used for generating the value for the reference pixel,

wherein if the size of the block is less than or equal to a threshold value, the tap length setting unit sets the tap length to be longer than when the size of the block is greater than the threshold value and/or if a quantization step size represented by the quantization parameter of the block is less than or equal to a threshold value, the tap length is set to be longer than when the quantization step size is greater than the threshold value.

9.  A picture encoding computer program comprising instructions which, when the program is executed by a computer, cause the computer to execute the picture encoding method according to claim 1, 2, or 3.

10. A picture decoding computer program comprising instructions which, when the program is executed by a computer, cause the computer to execute the picture decoding method according to claim 4, 5, or 6.

**Patentansprüche**

1.  Bildkodierungsverfahren zum Erzeugen eines Vorhersagesignals unter Verwendung einer räumlichen Zwischenpixelvorhersage und zum Kodieren eines Bildes unter Verwendung eines Vorhersage-Restsignals, das eine Differenz zwischen dem Vorhersagesignal und einem Originalsignal ist, das einen Block beinhaltet, der eine Verarbeitungseinheit zum Kodieren, Transformieren oder Vorhersagen ist und der ein Bereich ist, in dem Kodierung unter Verwendung einer Intra-Vorhersage durchgeführt wird, wobei das Bildkodierungsverfahren umfasst:

einen Schritt (S103) zum Erzeugen eines Intra-Vorhersagesignals, das einem bestimmten Intra-Vorhersagen-Modus entspricht, unter Verwendung eines Referenzpixels der Intra-Vorhersage, auf das Bezug genommen wird, wenn die Intra-Vorhersage durchgeführt wird, wobei das Referenzpixel in die Nähe des Blocks vorhanden ist, wobei das Referenzpixel gemäß einer Größe des Blocks und dem Intra-Vorhersage-Modus bestimmt wird, wobei das Referenzpixel in einem Intra-Referenzpixel-Bereich vorhanden ist, in dem für alle Intra-Vorhersage-Modi erforderlichen Referenzpixel vorhanden sind;
einen Schritt zum Erzeugen eines Intra-Vorhersage-Restsignals, das eine Differenz zwischen dem erzeugten Intra-Vorhersage-Signal und dem Originalsignal darstellt; und
einen Schritt zum Kodieren des Intra-Vorhersage-Restsignals,
wobei das Verfahren **dadurch gekennzeichnet ist, dass** es umfasst:

einen Schritt (S206, S216) zum Einstellen für das Referenzpixel einer Tap-Länge eines Interpolationsfilters, der zum Erzeugen eines Wertes für das Referenzpixel basierend auf ein oder beiden von der Größe des Blocks im Originalsignal und einem Quantisierungsparameter des Blocks erforderlich ist; und
einen Schritt (S207, S217) zum Durchführen eines Filterprozesses, der den Wert für das Referenzpixel durch einen Interpolationsprozess unter Verwendung des Interpolationsfilters erzeugt, der der eingestellten Tap-Länge basierend auf dem Intra-Vorhersage-Modus entspricht, und dekodierter Pixel, die in dem Intra-Referenzpixel-Bereich für den Block vorhanden sind und die gemäß dem Intra-Vorhersage-Modus bestimmt werden, der zum Erzeugen des Wertes für das Referenzpixel verwendet wurde,

wobei in dem Schritt des Einstellens der Tap-Länge des Interpolationsfilters, wenn die Größe des Blocks kleiner oder gleich einem Schwellenwert ist, die Tap-Länge so eingestellt ist, dass sie länger ist als wenn die Größe des Blocks größer als der Schwellenwert ist und/oder wenn eine Quantisierungsschrittgröße, die durch den Quantisierungsparameter des Blocks dargestellt wird, kleiner oder gleich einem Schwellenwert ist, die Tap-Länge so eingestellt ist, dass sie länger ist als wenn die Quantisierungsschrittgröße größer als der Schwellenwert ist.

2. Bildkodierungsverfahren gemäß Anspruch 1, wobei in dem Schritt des Einstellens der Tap-Länge des Interpolationsfilters die Tap-Länge, die der Größe des Blocks entspricht, aus einer vorbestimmten Tabelle ermittelt wird, die Informationen beinhaltet, die darstellen, dass eine kürzere Tap-Länge verwendet wird, wenn die Größe des Blocks größer ist, und eine längere Tap-Länge verwendet wird, wenn die Größe des Blocks kleiner ist, und die ermittelt Tap-Länge eingestellt wird.

3. Bildkodierungsverfahren gemäß Anspruch 1, wobei im Schritt des Einstellens der Tap-Länge des Interpolationsfilters die dem Quantisierungsparameter des Blocks entsprechende Tap-Länge aus einer vorbestimmten Tabelle ermittelt wird, die Informationen enthält, die darstellen, dass eine kürzere Tap-Länge verwendet wird, wenn der Quantisierungsparameter des Blocks größer ist, und eine längere Tap-Länge verwendet wird, wenn der Quantisierungsparameter des Blocks kleiner ist, und die ermittelte Tap-Länge eingestellt wird.

4. Bilddekodierungsverfahren zum Erzeugen eines Vorhersagesignals unter Verwendung einer räumlichen Zwischenpixelvorhersage und zum Dekodieren eines Bildes unter Verwendung eines Vorhersage-Restsignals, das eine Differenz zwischen dem Vorhersagesignal und einem Originalsignal ist, das einen Block beinhaltet, der eine Verarbeitungseinheit zum Kodieren, Transformieren oder Vorhersagen ist und der ein Bereich ist, in dem die Kodierung unter Verwendung einer Intra-Vorhersage durchgeführt wird, wobei das Bilddekodierungsverfahren umfasst:

einen Schritt zum Dekodieren eines Intra-Vorhersage-Restsignals, eines Intra-Vorhersage-Modus und einer Größe eines Intra-Vorhersageblocks in einem kodierten Eingangsstrom;
einen Schritt (S101) zum Identifizieren eines Referenzpixels der Intra-Vorhersage, auf das verwiesen wird, wenn die Intra-Vorhersage basierend auf dem Intra-Vorhersage-Modus und der Größe des Intra-Vorhersage-Blocks durchgeführt wird, wobei das Referenzpixel in der Nähe des Blocks vorhanden ist, wobei das Referenzpixel in einem Intra-Referenz-Pixelbereich vorhanden ist, in dem für alle Intra-Vorhersage-Modi erforderlichen Referenzpixel der Intra-Vorhersage vorhanden sind;
einen Schritt (S103) zum Erzeugen eines Intra-Vorhersagesignals, das dem dekodierten Intra-Vorhersagen-Modus entspricht, unter Verwendung des Referenzpixels; und
einen Schritt zum Erzeugen eines dekodierten Signals eines dekodierten Zielbereichs unter Verwendung des Intra-Vorhersagesignals und des Intra-Vorhersage-Restsignals,
wobei das Verfahren **dadurch gekennzeichnet ist, dass** es umfasst:

einen Schritt (S206, S216) zum Einstellen einer Tap-Länge eines Interpolationsfilters für das Referenzpixel, der zum Erzeugen eines Wertes für das Referenzpixel basierend auf ein oder beiden von einer Größe des Blocks in dem Originalsignal und einem Quantisierungsparameter des Blocks erforderlich ist; und
einen Schritt (S207, S217) zum Durchführen eines Filterprozesses, der den Wert für das Referenzpixel durch einen Interpolationsprozess unter Verwendung des Interpolationsfilters erzeugt, der der eingestellten Tap-Länge basierend auf dem Intra-Vorhersage-Modus entspricht, und dekodierter Pixel, die im Intra-Referenzpixel-Bereich für den Block vorhanden sind und die gemäß dem Intra-Vorhersage-Modus bestimmt werden, der zum Erzeugen des Wertes für das Referenzpixel verwendet wurde,

wobei in dem Schritt des Einstellens der Tap-Länge des Interpolationsfilters, wenn die Größe des Blocks kleiner oder gleich einem Schwellenwert ist, die Tap-Länge so eingestellt ist, dass sie länger ist als wenn die Größe des Blocks größer als der Schwellenwert ist und/oder wenn eine Quantisierungsschrittgröße, die durch den Quantisierungsparameter des Blocks dargestellt wird, kleiner oder gleich einem Schwellenwert ist, die Tap-Länge so eingestellt ist, dass sie länger ist als wenn die Quantisierungsschrittgröße größer als der Schwellenwert ist.

5. Bilddekodierungsverfahren gemäß Anspruch 4, wobei in dem Schritt des Einstellens der Tap-Länge des Interpolationsfilters die Tap-Länge, die der Größe des Blocks entspricht, aus einer vorbestimmten Tabelle ermittelt wird, die Informationen enthält, die darstellen, dass eine kürzere Tap-Länge verwendet wird, wenn die Größe des Blocks größer ist, und eine längere Tap-Länge verwendet wird, wenn die Größe des Blocks kleiner ist, und die ermittelte Tap-Länge eingestellt wird.

6. Bilddekodierungsverfahren gemäß Anspruch 4, wobei im Schritt des Einstellens der Tap-Länge des Interpolationsfilters die dem Quantisierungsparameter des Blocks entsprechende Tap-Länge aus einer vorbestimmten Tabelle ermittelt wird, die Informationen enthält, die darstellen, dass eine kürzere Tap-Länge verwendet wird, wenn der Quantisierungsparameter des Blocks größer ist, und eine längere Tap-Länge verwendet wird, wenn der Quantisierungsparameter des Blocks kleiner ist, und die ermittelte Tap-Länge eingestellt wird.

7. Bildkodierungsvorrichtung, die ein Vorhersagesignal unter Verwendung einer räumlichen Zwischenpixelvorhersage erzeugt und ein Bild unter Verwendung eines Vorhersage-Restsignals kodiert, das eine Differenz zwischen dem Vorhersagesignal und einem Originalsignal ist, das einen Block beinhaltet, der eine Verarbeitungseinheit zum Kodieren, Transformieren oder Vorhersagen ist, und der ein Bereich ist, in dem Kodierung unter Verwendung einer Intra-Vorhersage durchgeführt wird,
wobei die Bildkodierungsvorrichtung umfasst:

eine Vorhersage-Signalerzeugungseinheit (303), die ein Intra-Vorhersage-Signal erzeugt, das einem bestimmten Intra-Vorhersage-Modus entspricht, unter Verwendung eines Referenzpixels der Intra-Vorhersage, auf das Bezug genommen wird, wenn die Intra-Vorhersage durchgeführt wird, wobei das Referenzpixel in der Nähe des Blocks vorhanden ist, wobei das Referenzpixel gemäß einer Größe des Blocks und dem Intra-Vorhersage-Modus bestimmt wird, wobei das Referenzpixel in einem Intra-Referenzpixel-Bereich vorhanden ist, in dem für alle Intra-Vorhersage-Modi erforderlichen Referenzpixel der Intra-Vorhersage-Pixel vorhanden sind;
eine Vorhersage-Restsignalerzeugungseinheit (103), die ein Intra-Vorhersage-Restsignal erzeugt, das eine Differenz zwischen dem erzeugten Intra-Vorhersage-Signal und dem Originalsignal darstellt; und
eine Vorhersage-Restsignalkodierungseinheit (104, 105, 113), die das Intra-Vorhersage-Restsignal kodiert,

wobei die Vorrichtung **dadurch gekennzeichnet ist, dass** sie umfasst:

eine Tap-Längeneinstellungseinheit (506, 516), die für das Referenzpixel eine Tap-Länge eines Interpolationsfilters, der zum Erzeugen eines Wertes für das Referenzpixel erforderlich ist, basierend auf ein oder beiden von der Größe des Blocks im Originalsignal und einem Quantisierungsparameter des Blocks einstellt; und
eine Filterverarbeitungseinheit (507, 517), die einen Filterprozess durchführt, der den Wert für das Referenzpixel durch einen Interpolationsprozess unter Verwendung des Interpolationsfilters erzeugt, der der eingestellten Tap-Länge basierend auf dem Intra-Vorhersage-Modus entspricht, und dekodierten Pixeln, die in dem Intra-Referenzpixel-Bereich für den Block vorhanden sind und die gemäß dem Intra-Vorhersage-Modus bestimmt werden, der zum Erzeugen des Wertes für das Referenzpixel verwendet wurde,

wobei, wenn die Größe des Blocks kleiner oder gleich einem Schwellenwert ist, die Tap-Längeneinstellungseinheit die Tap-Länge so einstellt, dass sie länger ist als wenn die Größe des Blocks größer als der Schwellenwert ist und/oder wenn eine Quantisierungsschrittgröße, die durch den Quantisierungsparameter des Blocks dargestellt wird, kleiner oder gleich einem Schwellenwert ist, die Tap-Länge so eingestellt wird, dass sie länger ist als wenn die Quantisierungsschrittgröße größer als der Schwellenwert ist.

8. Bilddekodierungsvorrichtung, die ein Vorhersagesignal unter Verwendung einer räumlichen Zwischenpixelvorhersage erzeugt und ein Bild unter Verwendung eines Vorhersage-Restsignals dekodiert, das eine Differenz zwischen dem Vorhersagesignal und einem Originalsignal ist, das einen Block beinhaltet, der eine Verarbeitungseinheit zum Kodieren, Transformieren oder Vorhersagen ist und der ein Bereich ist, in dem Kodierung unter Verwendung einer Intra-Vorhersage durchgeführt wird, wobei die Bilddekodierungsvorrichtung umfasst:

eine Dekodierungseinheit (201), die ein Intra-Vorhersage-Restsignal, einen Intra-Vorhersage-Modus und eine Größe eines Intra-Vorhersage-Blocks in einem kodierten Eingangsstrom dekodiert;
eine Identifizierungseinheit (502), die ein Referenzpixel der Intra-Vorhersage identifiziert, auf das Bezug genommen wird, wenn die Intra-Vorhersage basierend auf dem Intra-Vorhersage-Modus und der Größe des Intra-Vorhersage-Blocks durchgeführt wird, wobei das Referenzpixel in der Nähe des Blocks vorhanden ist, wobei das Referenzpixel in einem Intra-Referenz-Pixelbereich vorhanden ist, in dem für alle Intra-Vorhersage-Modi erforderlichen Referenzpixel der Intra-Vorhersage vorhanden sind;
eine Vorhersage-Signalerzeugungseinheit (303), die ein Intra-Vorhersage-Signal erzeugt, das dem dekodierten Intra-Vorhersage-Modus unter Verwendung des Referenzpixels entspricht; und
eine Dekodiertes-Signalerzeugungseinheit (206), die ein dekodiertes Signal eines dekodierten Zielbereichs unter Verwendung des erzeugten Intravorhersagesignals und des Intravorhersage-Restsignals erzeugt,

wobei die Vorrichtung **dadurch gekennzeichnet ist, dass** sie umfasst:

eine Tap-Längeneinstellungseinheit (506, 516), die für das Referenzpixel eine Tap-Länge eines Interpolationsfilters, der zum Erzeugen eines Wertes für das Referenzpixel erforderlich ist, basierend auf ein oder beiden von einer Größe des Blocks im Originalsignal und einem Quantisierungsparameter des Blocks einstellt; und eine Filterverarbeitungseinheit (507, 517), die einen Filterprozess durchführt, der den Wert für das Referenzpixel durch einen Interpolationsprozess unter Verwendung des Interpolationsfilters erzeugt, der der eingestellten Tap-Länge basierend auf dem Intra-Vorhersage-Modus entspricht, und dekodierten Pixeln, die in dem Intra-Referenzpixel-Bereich für den Block vorhanden sind und die gemäß dem Intra-Vorhersage-Modus bestimmt werden, der zum Erzeugen des Wertes für das Referenzpixel verwendet wurde,

wobei, wenn die Größe des Blocks kleiner oder gleich einem Schwellenwert ist, die Tap-Längeneinstellungseinheit die Tap-Länge so einstellt, dass sie länger ist als wenn die Größe des Blocks größer als der Schwellenwert ist und/oder wenn eine Quantisierungsschrittgröße, die durch den Quantisierungsparameter des Blocks dargestellt wird, kleiner oder gleich einem Schwellenwert ist, die Tap-Länge so eingestellt wird, dass sie länger ist als wenn die Quantisierungsschrittgröße größer als der Schwellenwert ist.

9.  Bildkodierungs-Computerprogramm, das Anweisungen umfasst, die, wenn das Programm von einem Computer ausgeführt wird, den Computer veranlassen, das Bildkodierungsverfahren nach Anspruch 1, 2 oder 3 auszuführen.

10. Bilddekodierungs-Computerprogramm, das Anweisungen umfasst, die, wenn das Programm von einem Computer ausgeführt wird, den Computer veranlassen, das Bilddekodierungsverfahren nach Anspruch 4, 5 oder 6 auszuführen.

## Revendications

1.  Procédé de codage d'image pour générer un signal de prédiction en utilisant une prédiction inter-pixel spatiale et coder une image en utilisant un signal résiduel de prédiction qui est une différence entre le signal de prédiction et un signal initial qui inclut un bloc qui est une unité de traitement de codage, de transformation ou de prédiction et qui est une région dans laquelle le codage est effectué par intra-prédiction, le procédé de codage d'image comprenant :

une étape (S103) de génération d'un signal d'intra-prédiction correspondant à un mode d'intra-prédiction désigné au moyen d'un pixel de référence de l'intra-prédiction auquel il est fait référence lorsque l'intra-prédiction est effectuée, le pixel de référence étant présent à proximité du bloc, le pixel de référence étant déterminé en fonction d'une taille du bloc et du mode d'intra-prédiction, le pixel de référence étant présent dans une région intra-pixel de référence dans laquelle des pixels de référence de l'intra-prédiction nécessaires pour tous les modes d'intra-prédiction sont présents ;
une étape de génération d'un signal résiduel d'intra-prédiction représentant une différence entre le signal d'intra-prédiction généré et le signal initial ; et
une étape de codage du signal résiduel d'intra-prédiction,
le procédé étant **caractérisé en ce qu'**il comprend :

une étape (S206, S216) de définition, pour le pixel de référence, d'une longueur de prise d'un filtre d'interpolation nécessaire pour générer une valeur du pixel de référence sur la base soit d'une taille du bloc dans le signal initial, soit d'un paramètre de quantification du bloc, soit des deux ; et
une étape (S207, S217) de réalisation d'un processus de filtrage qui génère la valeur du pixel de référence par un processus d'interpolation utilisant le filtre d'interpolation correspondant à la longueur de prise définie sur la base du mode d'intra-prédiction et de pixels décodés qui sont présents dans la région intra-pixel de référence du bloc et qui sont déterminés en fonction du mode d'intra-prédiction utilisé pour générer la valeur du pixel de référence,

dans lequel, dans l'étape de définition de la longueur de prise du filtre d'interpolation, si la taille du bloc est inférieure ou égale à une valeur seuil, la longueur de prise est définie comme étant plus importante que lorsque la taille du bloc est supérieure à la valeur seuil et/ou si une taille du pas de quantification représentée par le paramètre de quantification du bloc est inférieure ou égale à une valeur seuil, la longueur de prise est définie comme étant plus importante que lorsque la taille du pas de quantification est supérieure à la valeur seuil.

2. Procédé de codage d'image selon la revendication 1, dans lequel, dans l'étape de définition de la longueur de prise du filtre d'interpolation, la longueur de prise correspondant à la taille du bloc est acquise à partir d'une table prédéterminée incluant des informations indiquant qu'une longueur de prise plus faible est utilisée lorsque la taille du bloc est plus importante et qu'une longueur de prise plus importante est utilisée lorsque la taille du bloc est plus faible, et la longueur de la prise acquise est définie.

3. Procédé de codage d'image selon la revendication 1, dans lequel, dans l'étape de définition de la longueur de prise du filtre d'interpolation, la longueur de prise correspondant au paramètre de quantification du bloc est acquise à partir d'une table prédéterminée incluant des informations indiquant qu'une longueur de prise plus faible est utilisée lorsque le paramètre de quantification du bloc est plus grand et qu'une longueur de prise plus importante est utilisée lorsque le paramètre de quantification du bloc est plus petit, et la longueur de la prise acquise est définie.

4. Procédé de décodage d'image pour générer un signal de prédiction en utilisant une prédiction inter-pixel spatiale et décoder une image en utilisant un signal résiduel de prédiction qui est une différence entre le signal de prédiction et un signal initial qui inclut un bloc qui est une unité de traitement de codage, de transformation ou de prédiction et qui est une région dans laquelle le codage est effectué par intra-prédiction, le procédé de décodage d'image comprenant :

   une étape de décodage d'un signal résiduel d'intra-prédiction, d'un mode d'intra-prédiction et d'une taille d'un bloc d'intra-prédiction dans un flux codé d'entrée ;
   une étape (S101) d'identification d'un pixel de référence de l'intra-prédiction auquel il est fait référence lorsque l'intra-prédiction est effectuée sur la base du mode d'intra-prédiction et de la taille du bloc d'intra-prédiction, le pixel de référence étant présent à proximité du bloc, le pixel de référence étant présent dans une région intra-pixel de référence dans laquelle des pixels de référence de l'intra-prédiction nécessaires pour tous les modes d'intra-prédiction sont présents ;
   une étape (S103) de génération d'un signal d'intra-prédiction correspondant au mode d'intra-prédiction décodé au moyen du pixel de référence ; et
   une étape de génération d'un signal décodé d'une région cible de décodage au moyen du signal d'intra-prédiction et du signal résiduel d'intra-prédiction,
   le procédé étant **caractérisé en ce qu'**il comprend :

      une étape (S206, S216) de définition, pour le pixel de référence, d'une longueur de prise d'un filtre d'interpolation nécessaire pour générer une valeur du pixel de référence sur la base soit d'une taille du bloc dans le signal initial, soit d'un paramètre de quantification du bloc, soit des deux ; et
      une étape (S207, S217) de réalisation d'un processus de filtrage qui génère la valeur du pixel de référence par un processus d'interpolation utilisant le filtre d'interpolation correspondant à la longueur de prise définie sur la base du mode d'intra-prédiction et de pixels décodés qui sont présents dans la région intra-pixel de référence du bloc et qui sont déterminés en fonction du mode d'intra-prédiction utilisé pour générer la valeur du pixel de référence,

   dans lequel, dans l'étape de définition de la longueur de prise du filtre d'interpolation, si la taille du bloc est inférieure ou égale à une valeur seuil, la longueur de prise est définie comme étant plus importante que lorsque la taille du bloc est supérieure à la valeur seuil et/ou si une taille du pas de quantification représentée par le paramètre de quantification du bloc est inférieure ou égale à une valeur seuil, la longueur de prise est définie comme étant plus importante que lorsque la taille du pas de quantification est supérieure à la valeur seuil.

5. Procédé de codage d'image selon la revendication 4, dans lequel, dans l'étape de définition de la longueur de prise du filtre d'interpolation, la longueur de prise correspondant à la taille du bloc est acquise à partir d'une table prédéterminée incluant des informations indiquant qu'une longueur de prise plus faible est utilisée lorsque la taille du bloc est plus importante et qu'une longueur de prise plus importante est utilisée lorsque la taille du bloc est plus faible, et la longueur de la prise acquise est définie.

6. Procédé de décodage d'image selon la revendication 4, dans lequel, dans l'étape de définition de la longueur de prise du filtre d'interpolation, la longueur de prise correspondant au paramètre de quantification du bloc est acquise à partir d'une table prédéterminée incluant des informations indiquant qu'une longueur de prise plus faible est utilisée lorsque le paramètre de quantification du bloc est plus grand et qu'une longueur de prise plus importante est utilisée lorsque le paramètre de quantification du bloc est plus petit, et la longueur de la prise acquise est définie.

7. Appareil de codage d'image qui génère un signal de prédiction en utilisant une prédiction inter-pixel spatiale et code une image en utilisant un signal résiduel de prédiction qui est une différence entre le signal de prédiction et un signal initial qui inclut un bloc qui est une unité de traitement de codage, de transformation ou de prédiction et qui est une région dans laquelle le codage est effectué par intra-prédiction, l'appareil de codage d'image comprenant :

une unité de génération de signal de prédiction (303) qui génère un signal d'intra-prédiction correspondant à un mode d'intra-prédiction désigné en utilisant un pixel de référence de l'intra-prédiction auquel il est fait référence lorsque l'intra-prédiction est effectuée, le pixel de référence étant présent à proximité du bloc, le pixel de référence étant déterminé en fonction d'une taille du bloc et du mode d'intra-prédiction, le pixel de référence étant présent dans une région intra-pixel de référence dans laquelle des pixels de référence de l'intra-prédiction nécessaires pour tous les modes d'intra-prédiction sont présents ;
une unité de génération de signal résiduel de prédiction (103) qui génère un signal résiduel d'intra-prédiction représentant une différence entre le signal d'intra-prédiction généré et le signal initial ; et
une unité de codage de signal résiduel de prédiction (104, 105, 113) qui code le signal résiduel d'intra-prédiction, l'appareil étant **caractérisé en ce qu'**il comprend :

une unité de définition de longueur de prise (506, 516) qui définit, pour le pixel de référence, une longueur de prise d'un filtre d'interpolation nécessaire pour générer une valeur du pixel de référence sur la base soit de la taille du bloc dans le signal initial, soit d'un paramètre de quantification du bloc, soit des deux ; et
une unité de traitement de filtrage (507, 517) qui réalise un processus de filtrage qui génère la valeur du pixel de référence par un processus d'interpolation utilisant le filtre d'interpolation correspondant à la longueur de prise définie sur la base du mode d'intra-prédiction et de pixels décodés qui sont présents dans la région intra-pixel de référence du bloc et qui sont déterminés en fonction du mode d'intra-prédiction utilisé pour générer la valeur du pixel de référence,

dans lequel si la taille du bloc est inférieure ou égale à une valeur seuil, l'unité de définition de la longueur de prise définit la longueur de prise comme étant plus importante que lorsque la taille du bloc est supérieure à la valeur seuil et/ou si une taille du pas de quantification représentée par le paramètre de quantification du bloc est inférieure ou égale à une valeur seuil, la longueur de prise est définie comme étant plus importante que lorsque la taille du pas de quantification est supérieure à la valeur seuil.

8. Appareil de décodage d'image qui génère un signal de prédiction en utilisant une prédiction inter-pixel spatiale et décode une image en utilisant un signal résiduel de prédiction qui est une différence entre le signal de prédiction et un signal initial qui inclut un bloc qui est une unité de traitement de codage, de transformation ou de prédiction et qui est une région dans laquelle le codage est effectué par intra-prédiction, l'appareil de décodage d'image comprenant :

une unité de décodage (201) qui décode un signal résiduel d'intra-prédiction, un mode d'intra-prédiction et une taille d'un bloc d'intra-prédiction dans un flux codé d'entrée ;
une unité d'identification (502) qui identifie un pixel de référence de l'intra-prédiction auquel il est fait référence lorsque l'intra-prédiction est effectuée sur la base du mode d'intra-prédiction et de la taille du bloc d'intra-prédiction, le pixel de référence étant présent à proximité du bloc, le pixel de référence étant présent dans une région intra-pixel de référence dans laquelle des pixels de référence de l'intra-prédiction nécessaires pour tous les modes d'intra-prédiction sont présents ;
une unité de génération de signal de prédiction (303) qui génère un signal d'intra-prédiction correspondant au mode d'intra-prédiction décodé en utilisant le pixel de référence ; et
une unité de génération de signal décodé (206) qui génère un signal décodé d'une région cible de décodage en utilisant le signal d'intra-prédiction généré et le signal résiduel d'intra-prédiction,
l'appareil étant **caractérisé en ce qu'**il comprend :

une unité de définition de longueur de prise (506, 516) qui définit, pour le pixel de référence, une longueur de prise d'un filtre d'interpolation nécessaire pour générer une valeur du pixel de référence sur la base soit d'une taille du bloc dans le signal initial, soit d'un paramètre de quantification du bloc, soit des deux ; et
une unité de traitement de filtrage (507, 517) qui réalise un processus de filtrage qui génère la valeur du pixel de référence par un processus d'interpolation utilisant le filtre d'interpolation correspondant à la longueur de prise définie sur la base du mode d'intra-prédiction et de pixels décodés qui sont présents dans la région intra-pixel de référence du bloc et qui sont déterminés en fonction du mode d'intra-prédiction utilisé pour générer la valeur du pixel de référence,

dans lequel si la taille du bloc est inférieure ou égale à une valeur seuil, l'unité de définition de la longueur de prise définit la longueur de prise comme étant plus importante que lorsque la taille du bloc est supérieure à la valeur seuil et/ou si une taille du pas de quantification représentée par le paramètre de quantification du bloc est inférieure ou égale à une valeur seuil, la longueur de prise est définie comme étant plus importante que lorsque la taille du pas de quantification est supérieure à la valeur seuil.

9. Programme informatique de codage d'image comprenant des instructions qui, lorsque le programme est exécuté par un ordinateur, amènent l'ordinateur à exécuter le procédé de codage d'image selon les revendications 1, 2 ou 3.

10. Programme informatique de décodage d'image comprenant des instructions qui, lorsque le programme est exécuté par un ordinateur, amènent l'ordinateur à exécuter le procédé de décodage d'image selon les revendications 4, 5 ou 6.

# FIG. 1A

PO
: PIXEL WITHIN CODING
TARGET BLOCK

P1
: CODED PIXEL

P2
: REFERENCE PIXEL
IN VERTICAL-DIRECTION
PREDICTION

# FIG. 1B

PO
: PIXEL WITHIN
CODING TARGET BLOCK

P1
: CODED PIXEL

P3
: REFERENCE PIXEL
IN HORIZONTAL-DIRECTION
PREDICTION

# FIG. 1C

PO
: PIXEL WITHIN CODING
TARGET BLOCK

P1
: CODED PIXEL

R
: INTRA-REFERENCE
PIXEL REGION

# FIG. 2

INPUT SIGNAL

103

104 TRANSFORM PROCESSING UNIT

105 QUANTIZATION PROCESSING UNIT

106 INVERSE QUANTIZATION PROCESSING UNIT

107 INVERSE TRANSFORM PROCESSING UNIT

108

101 INTRA-PREDICTION PROCESSING UNIT

102 INTER-PREDICTION PROCESSING UNIT

111 INTER-PREDICTION INFORMATION STORAGE UNIT

112 INTRA-PREDICTION INFORMATION STORAGE UNIT

109 FRAME MEMORY

110 IN-LOOP FILTERING PROCESSING UNIT

113 ENTROPY ENCODING PROCESSING UNIT

100

ENCODED STREAM

EP 2 755 388 B1

# FIG. 3

# FIG. 4

101,202

**INTRA-PREDICTION PROCESSING UNIT**

301

302

303

INTRA-PREDICTION MODE → BLOCK POSITION IDENTIFYING UNIT → REFERENCE PIXEL GENERATING UNIT → INTRA-PREDICTION VALUE GENERATING UNIT → INTRA-PREDICTION VALUE

# FIG. 5

START

S101

IDENTIFY POSITION WITHIN FRAME OF INTRA-PREDICTION BLOCK

S102

GENERATE INTRA-REFERENCE PIXELS IN ACCORDANCE WITH INTRA-PREDICTION MODE

S103

PERFORM PREDICTION CORRESPONDING TO INTRA-PREDICTION MODE USING INTRA-REFERENCE PIXELS AND GENERATE INTRA-PREDICTION VALUE

END

# FIG. 6

DECODED
PIXEL VALUE →

DECODED PIXEL
VALUE STORAGE
UNIT
501

INTRA-PREDICTION
MODE →

DECODED PIXEL
VALUE READING
UNIT
502

PREDICTION
MODE
DETERMINING
UNIT
503

INTRA-PREDICTION
BLOCK SIZE
READING UNIT
505

INTERPOLATION
FILTER
SELECTING
UNIT
506

REFERENCE
PIXEL VALUE
GENERATING
UNIT
507

INTRA-PREDICTION
BLOCK SIZE

INTRA-PREDICTION
BLOCK SIZE
STORAGE UNIT
504

INTRA-REFERENCE
PIXEL VALUE

EP 2 755 388 B1

# FIG. 7

```
        ┌─────────┐
        │  START  │
        └─────────┘
             │                              ⌇S201
             ▼
    ┌──────────────────────────┐
    │ READ INTRA-PREDICTION MODE│
    └──────────────────────────┘
             │                              ⌇S202
             ▼
    ┌──────────────────────────┐
    │ READ DECODED PIXEL VALUE NECESSARY│
    │ FOR GENERATION OF REFERENCE PIXEL │
    └──────────────────────────┘
             │                              ⌇S203
             ▼
        ╱───────────────╲
       ╱ IS INTERPOLATION ╲        NO
      ╱ OF DECIMAL PIXEL POSITION╲──────────┐
       ╲    NECESSARY?    ╱                  │
        ╲───────────────╱                    │
             │ YES                           │
    ┌ ─ ─ ─ ─│─ ─ ─ ─ ─ ─ ─ ┐                │
             ▼            ⌇S205              │
    │ ┌──────────────────┐ │                 ▼
      │   READ BLOCK SIZE │              ⌇S204
    │ │  OF INTRA-PREDICTION│ │   ┌────────────────────────┐
      └──────────────────┘      │ READ REFERENCE PIXEL VALUE │
    │        │          ⌇S206 │  │NECESSARY FOR INTRA-PREDICTION│
             ▼                     └────────────────────────┘
    │ ┌──────────────────┐ │           │
      │SELECT INTERPOLATION FILTER TO│  │
    │ │BE USED TO GENERATE INTRA-REFERENCE│
      │PIXEL IN ACCORDANCE WITH BLOCK │
    │ │   SIZE OF INTRA-PREDICTION │ │
      │  AND INTRA-PREDICTION MODE │
    │ └──────────────────┘ │           │
    └ ─ ─ ─ ─│─ ─ ─ ─ ─ ─ ─ ┘           │
             │            ⌇S207         │
             ▼                           │
    ┌──────────────────────────┐         │
    │  GENERATE REFERENCE PIXEL │         │
    │   VALUE NECESSARY FOR     │         │
    │  INTRA PREDICTION USING   │         │
    │ SELECTED INTERPOLATION FILTER│      │
    └──────────────────────────┘         │
             │◄──────────────────────────┘
             ▼
        ┌─────────┐
        │   END   │
        └─────────┘
```

FIG. 8

## FIG. 9

START

READ INTRA-PREDICTION MODE — S211

READ DECODED PIXEL VALUE NECESSARY FOR GENERATION OF REFERENCE PIXEL — S212

IS INTERPOLATION OF DECIMAL PIXEL POSITION NECESSARY? — S213
NO

YES

READ PARAMETER FOR IDENTIFYING QUANTIZATION STEP SIZE — S215

SELECT INTERPOLATION FILTER TO BE USED TO GENERATE INTRA-REFERENCE PIXEL IN ACCORDANCE WITH QUANTIZATION STEP SIZE AND INTRA-PREDICTION MODE — S216

READ REFERENCE PIXEL VALUE NECESSARY FOR INTRA-PREDICTION — S214

GENERATE REFERENCE PIXEL VALUE NECESSARY FOR INTRA PREDICTION USING SELECTED INTERPOLATION FILTER — S217

END

# FIG. 10

700 — CPU

701 — MEMORY

702 — VIDEO SIGNAL INPUT UNIT (STORAGE UNIT)

703 — PROGRAM STORAGE APPARATUS

704 — MOVING-PICTURE ENCODING PROGRAM

705 — ENCODED STREAM OUTPUT UNIT (STORAGE UNIT)

# FIG. 11

800 — CPU

801 — MEMORY

802 — ENCODED STREAM INPUT UNIT (STORAGE UNIT)

803 — PROGRAM STORAGE APPARATUS

804 — MOVING-PICTURE DECODING PROGRAM

805 — DECODED VIDEO DATA OUTPUT UNIT (STORAGE UNIT)

# FIG. 12A

73  79  86  89
‖   ‖   ‖   ‖

X  A  B  C  D  E  F  G  H

I
J
K
L

4×4 CODING
TARGET BLOCK

◯ :REFERENCE PIXEL

# FIG. 12B

73  79  86  89
‖   ‖   ‖   ‖

X  A  B  C  D  E  F  G  H

| I | 73 | 79 | 86 | 89 |
| J | 73 | 79 | 86 | 89 |
| K | 73 | 79 | 86 | 89 |
| L | 73 | 79 | 86 | 89 |

◯ :REFERENCE PIXEL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011243041 A

### Non-patent literature cited in the description

- Mode-dependent intra frame interpolation for H. 264/AVC compressed video. **XINWEI GAO et al.** VISUAL COMMUNICATIONS AND IMAGE PROCESSING (VCIP), 2011 IEEE. IEEE, 06 November 2011, 1-4
- An adaptive interpolation scheme for inter-layer prediction. **YOU WEIWEI et al.** CIRCUITS AND SYSTEMS, 2008. APCCAS 2008. IEEE ASIA PACIFIC CONFERENCE ON. IEEE, 30 November 2008, 1747-1750
- **LOU J et al.** Motorola Mobility's adaptive interpolation filter. *96. MPEG MEETING; 21-3-2011 - 25-3-2011; GENEVA; (MOTION PICTURE EXPERT GROUP OR ISO/IEC JTC1/SC29/WG11),* 16 March 2011

- **BROSS B et al.** WD4: Working Draft 4 of High-Efficiency Video Coding. *6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16),* 09 August 2011, HTTP://WFTP3.ITU.INT/AV-ARCH/JCTVC-SITE/?
- Impress R&D. **SAKAE OKUBO ; SHINYA KADONO ; YOSHIHIRO KIKUCHI ; TERUHIKO SUZUKI.** H.264/AVC Textbook. 2009, 110-116